# EUROPEAN PATENT APPLICATION

(11) **EP 2 453 440 A2**
(43) Date of publication of application: **16.05.2012**
(21) Application number: 11187459.0
(22) Date of filing: 02.11.2011
(51) Int. Cl.: G11B 23/40, G11B 17/056, B41J 3/407

(54) **Disc driving apparatus**

(30) Priority: 16.11.2010 JP 2010256237
(71) Applicant: Sony Corporation, Tokyo 108-0075 (JP)
(72) Inventor: Iwanabe, Takatoshi, Minato-ku, Tokyo 108-0075 (JP); Sone, Masakazu, Minato-ku, Tokyo 108-0075 (JP); Onishi, Yoshitaka, Minato-ku, Tokyo 108-0075 (JP)
(74) Representative: Davies, Simon Robert

(57) **Abstract**

A disc driving apparatus includes: a recording and reproducing unit for recording or reproducing an information signal; and a print unit for performing printing to the printing surface of the disc-shaped recording medium. The print unit includes a print head contacting the printing surface when performing printing, a head feeding unit having a head support lever to which the print head is mounted, a guide cam having a cam guide portion extending in a movement direction of the head feeding unit, a moving cam having an forward path cam engagement portion engaged with the cam guide portion in the forward path and a return path cam engagement portion engaged with the cam guide portion in the return path; and a guide member guiding the movement of the head feeding unit between the initial location and the turnaround location.

## Description

The present disclosure relates to a technical field of a disc driving apparatus (or disk drive). More particularly, the present disclosure relates to a technical field of providing a reduced size in the thickness direction of a disc-shaped recording medium by installing a print unit which performs printing to the disc-shaped recording medium with a printing surface and keeping the print head of the print unit at a predetermined location when printing is not performed.

Along with the recent advances in digital technologies, various kinds of disc-shaped recording media such as CD (Compact Disc), DVD (Digital Versatile Disc), and BD (Blu-Ray Disc) are provided.

Regarding such disc-shaped recording media, in addition to recording or reproducing audio information or image information, there is a high demand for printing the contents of the recorded information and one surface of the disc-shaped medium is formed as a printing surface.

By printing contents of the recorded information on the printing surface, a user may easily distinguish a desired disc-shaped recording medium by recognizing the recorded information, thereby improving the convenience in use.

The disc driving apparatus for recording or reproducing information signals of the disc-shaped recording medium may include a recording and reproducing unit for recording or reproducing to a recording surface of the disc-shaped recording medium and a print unit which performs printing to the printing surface of the disc-shaped recording medium (for example, see Japanese Unexamined Patent Application Publication No. 2006-114194).

In the disc driving apparatus to which the print unit is installed, a disc-shaped recording medium of which one surface is a printing surface and the other surface is a recording surface is mounted, information signals are recorded or reproduced on the recording surface by a recording and reproducing unit with an optical pickup, and printing is performed to the printing surface by the print unit with the print head.

Since the recording and reproducing unit having an optical pickup or the like moves the optical pickup along the recording surface and records or reproduces information signals, the recording and reproducing unit is disposed at a side facing the recording surface. In addition, since the print unit with a print head performs printing while moving the print head along the printing surface, the print unit is disposed at a side facing the printing surface.

Therefore, the recording and reproducing unit and the print unit are disposed at opposite sides in the thickness direction of the disc-shaped recording medium mounted to a disc table with the disc-shaped recording medium being interposed therebetween.

There are various kinds of printing methods, and in the case where the print unit using an ink jet printing method is used for the disc driving apparatus, ink mist may scatter in the disc driving apparatus to contaminate the disc-shaped recording medium or various components disposed in the disc driving apparatus.

Therefore, as a printing method used for the above disc driving apparatus, a thermal transfer method using a thermal head or the like for printing by heat while pressing down the print head to a printing surface is desirable in order not to contaminate each component.

However, in the disc driving apparatus having the recording and reproducing unit for recording or reproducing information signals and the print unit for printing, since the recording and reproducing unit and the print unit are disposed at opposite sides with the disc-shaped recording medium interposed therebetween as described above, the size of the disc driving apparatus in the thickness direction of the disc-shaped recording medium may easily increase.

In addition, although the print head installed to the print unit is pressed to the printing surface of the disc-shaped recording medium when printing is performed, the print head should be kept away from the printing surface, and therefore designing a reduced (thinner) size in the thickness direction of the disc-shaped recording medium is hindered by the distance from the printing surface to the print head.

Various respective aspects and features of the invention are defined in the appended claims. Combinations of features from the dependent claims may be combined with features of the independent claims as appropriate and not merely as explicitly set out in the claims.

A disc driving apparatus according to the present disclosure helps to overcome the problems discussed above and to reduce a size in the thickness direction of the disc-shaped recording medium.

According to an embodiment of the present invention, there is provided a disc driving apparatus, which includes a recording and reproducing unit for recording or reproducing an information signal for a disc-shaped recording medium having a printing surface; and a print unit for performing printing to the printing surface of the disc-shaped recording medium, wherein the print unit includes: a print head contacting the printing surface when performing printing to the printing surface of the disc-shaped recording medium; a head feeding unit having a head support lever to which the print head is mounted, the head support lever being movable in a direction away from or coming into contact with the printing surface of the disc-shaped recording medium, the head feeding unit moving between an initial location and turnaround location along the printing surface of the disc-shaped recording medium and reciprocating the print head in an forward path from a first location to a second location and in a return path from the second location to the first location; a guide cam having a cam guide portion extending in the movement direction of the head feeding unit; a moving cam having an forward path cam engagement portion engaged with the cam guide portion in the forward path and a return path cam engagement portion engaged with the cam guide portion in the return path, supported to the head feeding unit to be movable in a predetermined direction, and integrated with the head feeding unit to reciprocate the head feeding unit; and a guide member disposed in a state of being fixed along the printing surface of the disc-shaped recording medium and guiding the movement of the head feeding unit between the initial location and the turnaround location, wherein the print head performs printing to the printing surface in the forward path or the return path, wherein the location of the head support lever with respect to the printing surface varies when the forward path cam engagement portion is engaged with the cam guide portion and when the return path cam engagement portion is engaged with the cam guide portion, and wherein, in a non-printing state in which printing is not performed to the printing surface, the print head is located at a position separated from the printing surface between the guide member and the printing surface.

Therefore, in the disc driving apparatus, the location of the print head with respect to the printing surface varies according to the engagement location of the moving cam to the cam guide portion of the guide cam, and the print head is maintained at a location separating from the printing surface during a non-printing state.

In the disc driving apparatus, it is desirable that the forward path cam engagement portion and the return path cam engagement portion of the moving cam have different widths from each other in the thickness direction of the disc-shaped recording medium.

Since the forward path cam engagement portion and the return path cam engagement portion of the moving cam have different widths from each other in the thickness direction of the disc-shaped recording medium, the location of the print head varies depending on the difference in widths between the forward path cam engagement portion and the return path cam engagement portion.

In the disc driving apparatus, it is desirable that the moving cam be supported to the head feeding unit to be movable in a direction orthogonal to the thickness direction of the disc-shaped recording medium, the moving cam be movable in the direction orthogonal to the thickness direction of the disc-shaped recording medium between a first engagement location where the forward path cam engagement portion is engaged with the cam guide portion and a second engagement location where the return path cam engagement portion is engaged with the cam guide portion, and the engagement locations of the forward path cam engagement portion and the return path cam engagement portion to the cam guide portion be shifted at the turnaround location.

Since the moving cam is movable in the direction orthogonal to the thickness direction of the disc-shaped recording medium and the engagement locations of the forward path cam engagement portion and the return path cam engagement portion to the cam guide portion are shifted, the moving cam may shift the engagement locations without moving in the thickness direction of the disc-shaped recording medium.

In the disc driving apparatus, it is desirable that a bias spring for biasing the moving cam in the direction orthogonal to the thickness direction of the disc-shaped recording medium be installed.

Since the bias spring for biasing the moving cam in the direction orthogonal to the thickness direction of the disc-shaped recording medium is installed, the moving cam may move in the thickness direction of the disc-shaped recording medium by the biasing force of the bias spring, and the engagement locations of the forward path cam engagement portion and the return path cam engagement portion to the cam guide portion may be shifted.

In the disc driving apparatus, it is desirable that a return cam on which the moving cam slides be installed, the return cam shifting the engagement locations of the forward path cam engagement portion and the return path cam engagement portion to the cam guide portion.

Since the return cam for shifting the engagement locations of the forward path cam engagement portion and the return path cam engagement portion to the cam guide portion is installed, the moving cam may slide on the return cam and may shift the engagement locations of the forward path cam engagement portion and the return path cam engagement portion to the cam guide portion.

In the disc driving apparatus, it is desirable that a cam support shaft extending in a direction orthogonal to the thickness direction of the disc-shaped recording medium and the direction in which the cam guide portion extends be installed to the head feeding unit, and the moving cam be supported to the cam support shaft to be rotatable in the axis rotation direction or to be movable in the axial direction.

Since the moving cam is supported to the cam support shaft to be rotatable around the axial direction and to be movable in the axial direction, the moving cam may move in the thickness direction of the disc-shaped recording medium in a state of being rotated with respect to the cam guide portion.

In the disc driving apparatus, it is desirable that a cam support shaft extending in a direction orthogonal to the thickness direction of the disc-shaped recording medium and the direction in which the cam guide portion extends be installed to the head feeding unit, the moving cam be supported to the cam support shaft to be rotatable in the axis rotation direction or to be movable in the axial direction, and the bias spring be supported to the cam support shaft.

Since the moving cam is supported to the cam support shaft to be rotatable in the axis rotation direction or to be movable in the axial direction and the bias spring is supported to the cam support shaft, the moving cam and the bias spring are supported to the same cam support shaft.

In the disc driving apparatus, it is desirable that a spring member for biasing the moving cam in a direction pressing the cam guide portion be installed.

Since the spring member for biasing the moving cam in a direction pressing the cam guide portion is installed, the moving cam slides into contact with the cam guide portion when the moving cam moves integrally with the head feeding unit.

In the disc driving apparatus, it is desirable that a regulating member pressed to the disc-shaped recording medium to regulate rotation of the disc-shaped recording medium when performing printing to the printing surface be installed.

Since the regulating member pressed to the disc-shaped recording medium to regulate rotation of the disc-shaped recording medium when performing printing to the printing surface is installed, the print head performs printing to the printing surface in a state in which the rotation of the disc-shaped recording medium is regulated.

In the disc driving apparatus, it is desirable that a driving motor for moving the head feeding unit between the initial location and the turnaround location be installed, a regulating member for being movable between a contact location contacting the disc-shaped recording medium and a non-contact location away from the disc-shaped recording medium, moving to the contact location when performing printing to the printing surface, and regulating rotation of the disc-shaped recording medium be installed, and the regulating member move between the contact location and the non-contact location according to the rotation of the driving motor.

Since the regulating member moves between the contact location and the non-contact location according to the rotation of the driving motor which moves the head feeding unit, it is possible to move the head feeding unit between the initial location and the turnaround location and to move the regulating member between the contact location and the non-contact location by using only one driving motor.

In the disc driving apparatus, it is desirable that a first operating unit and a second operating unit having different widths from each other in the thickness direction of the disc-shaped recording medium be installed to the cam guide portion of the guide cam, the print head be spaced apart from the printing surface of the disc-shaped recording medium in a state in which the forward path cam engagement portion of the moving cam is engaged with the first operating unit, and the print head contact the printing surface of the disc-shaped recording medium in a state in which the forward path cam engagement portion is engaged with the second operating unit, and the forward path cam engagement portion of the moving cam be engaged with the first operating unit when the regulating member is moving from the non-contact location to the contact location according to the rotation of the driving motor, and the forward path cam engagement portion of the moving cam be engaged with the second operating unit when the regulating member has moved to the contact location.

Since the forward path cam engagement portion is engaged with the first operating unit when the regulating member is moved from the non-contact location to the contact location and since the forward path cam engagement portion is engaged with the second operating unit when the regulating member has moved to the contact location, it is possible to regulate the rotation of the disc-shaped recording medium and move the print head successively at suitable timing.

In the disc driving apparatus, it is desirable that a disc rotating mechanism for changing a printing location on the printing surface by rotating the disc-shaped recording medium during the non-printing state be installed.

Since the disc rotating mechanism for changing a printing location on the printing surface by rotating the disc-shaped recording medium during the non-printing state is installed, it is possible to perform printing to a desired location of the printing surface of the disc-shaped recording medium.

In the disc driving apparatus, it is desirable that a disc rotating mechanism for changing a printing location on the printing surface by rotating the disc-shaped recording medium during the non-printing state be installed, a rotating motor and a roller rotated by the rotating motor be installed to the disc rotating mechanism, and a roller rotating in the same direction as the rotation direction of the disc-shaped recording medium and moving away from or coming into contact with the outer circumference of the disc-shaped recording medium be used as the regulating member.

Since the roller rotating in the same direction as the rotation direction of the disc-shaped recording medium and moving away from or coming into contact with the outer circumference of the disc-shaped recording medium is used as the regulating member, it is possible to rotate the disc-shaped recording medium or regulate the rotation of disc-shaped recording medium by rotating or stopping the roller.

A disc driving apparatus according to an embodiment of the present invention includes a recording and reproducing unit for recording or reproducing an information signal for a disc-shaped recording medium having a printing surface; and a print unit for performing printing to the printing surface of the disc-shaped recording medium, wherein the print unit includes: a print head contacting the printing surface when performing printing to the printing surface of the disc-shaped recording medium; a head feeding unit having a head support lever to which the print head is mounted, the head support lever being movable in a direction away from or coming into contact with the printing surface of the disc-shaped recording medium, the head feeding unit moving between an initial location and turnaround location along the printing surface of the disc-shaped recording medium and reciprocating the print head in an forward path from a first location to a second location and in a return path from the second location to the first location; a guide cam having a cam guide portion extending in the movement direction of the head feeding unit; a moving cam having an forward path cam engagement portion engaged with the cam guide portion in the forward path and a return path cam engagement portion engaged with the cam guide portion in the return path, supported to the head feeding unit to be movable in a predetermined direction, and integrated with the head feeding unit to reciprocate the head feeding unit; and a guide member disposed in a state of being fixed along the printing surface of the disc-shaped recording medium and guiding the movement of the head feeding unit between the initial location and the turnaround location, wherein the print head performs printing to the printing surface in the forward path or the return path, wherein the location of the head support lever with respect to the printing surface varies when the forward path cam engagement portion is engaged with the cam guide portion and when the return path cam engagement portion is engaged with the cam guide portion, and wherein, in a non-printing state in which printing is not performed to the printing surface, the print head is located at a position separated from the printing surface between the guide member and the printing surface.

Therefore, since the print head is located between the guide member and the printing surface in both a printing state and a non-printing state, it is possible to decrease the inner space in the thickness direction of the disc-shaped recording medium by that much and to decrease the size of the disc driving apparatus in the thickness direction of the disc-shaped recording medium.

In a disc driving apparatus according to an embodiment of the present invention, the forward path cam engagement portion and the return path cam engagement portion of the moving cam may have different widths from each other in the thickness direction of the disc-shaped recording medium.

Therefore, the location of the print head varies by a simple configuration, and desired operations may be performed without increasing production costs.

In the disc driving apparatus according to an embodiment of the present invention, the moving cam may be supported to the head feeding unit to be movable in a direction orthogonal to the thickness direction of the disc-shaped recording medium, the moving cam be movable in the direction orthogonal to the thickness direction of the disc-shaped recording medium between a first engagement location where the forward path cam engagement portion is engaged with the cam guide portion and a second engagement location where the return path cam engagement portion is engaged with the cam guide portion, and the engagement locations of the forward path cam engagement portion and the return path cam engagement portion to the cam guide portion be shifted at the turnaround location.

Therefore, the moving cam may shift the engagement location with respect to the cam guide portion of the guide cam by a simple configuration, and the engagement location of the moving cam to the cam guide portion may be shifted without increasing the size in a direction orthogonal to the thickness direction of the disc-shaped recording medium.

In the disc driving apparatus according to an embodiment of the present invention, a bias spring for biasing the moving cam in the direction orthogonal to the thickness direction of the disc-shaped recording medium may be installed.

Therefore, the engagement location of the moving cam to the cam guide portion may be shifted reliably and easily at the turnaround location.

In a disc driving apparatus according to an embodiment of the present invention, a return cam on which the moving cam slides may be installed, the return cam shifting the engagement locations of the forward path cam engagement portion and the return path cam engagement portion to the cam guide portion at the initial location.

Therefore, the engagement locations of the forward path cam engagement portion and the return path cam engagement portion to the cam guide portion may be reliably shifted by a simple configuration according to the movement of the head feeding unit toward the initial location.

In a disc driving apparatus according to an embodiment of the present invention, a cam support shaft extending in a direction orthogonal to the thickness direction of the disc-shaped recording medium and the direction in which the cam guide portion extends may be installed to the head feeding unit, and the moving cam be supported to the cam support shaft to be rotatable in the axis rotation direction or to be movable in the axial direction.

Therefore, since the member for making the moving cam be rotatable around the axial direction and be movable in the axial direction is a single cam support shaft, it is possible to decrease the number of components and simplify the mechanism.

In a disc driving apparatus according to an embodiment of the present invention, a cam support shaft extending in a direction orthogonal to the thickness direction of the disc-shaped recording medium and the direction in which the cam guide portion extends may be installed to the head feeding unit, the moving cam be supported to the cam support shaft to be rotatable in the axis rotation direction or to be movable in the axial direction, and the bias spring be supported to the cam support shaft.

Therefore, since the moving cam and the bias spring are supported to the cam support shaft, dedicated members respectively supporting the moving cam and the bias spring are not necessary, and it is possible to reduce the number of components and to decrease a size by effectively utilizing the disposition space.

In a disc driving apparatus according to an embodiment of the present invention, a spring member for biasing the moving cam in a direction pressing the cam guide portion may be installed.

Therefore, the moving cam may be typically engaged with the cam guide portion by a simple configuration, and it is possible to improve the operation precision without increasing production costs.

In a disc driving apparatus according to an embodiment of the present invention, a regulating member pressed to the disc-shaped recording medium to regulate rotation of the disc-shaped recording medium when performing printing to the printing surface may be installed.

Therefore, the disc-shaped recording medium does not rotate when the print head performs printing, and it is possible to ensure a good printing state by the print head to the printing surface.

In a disc driving apparatus according to an embodiment of the present invention, a driving motor for moving the head feeding unit between the initial location and the turnaround location may be installed, a regulating member for being movable between a contact location contacting the disc-shaped recording medium and a non-contact location away from the disc-shaped recording medium, moving to the contact location when performing printing to the printing surface, and regulating rotation of the disc-shaped recording medium be installed, and the regulating member move between the contact location and the non-contact location according to the rotation of the driving motor.

Therefore, dedicated powers for respectively moving the head feeding portion and the regulating member are not necessary, and it is possible to decrease a size and to reduce the number of components by effectively utilizing the disposition space.

In a disc driving apparatus according to an embodiment of the present invention, a first operating unit and a second operating unit having different widths from each other in the thickness direction of the disc-shaped recording medium may be installed to the cam guide portion of the guide cam, the print head be spaced apart from the printing surface of the disc-shaped recording medium in a state in which the forward path cam engagement portion of the moving cam is engaged with the first operating unit, and the print head contact the printing surface of the disc-shaped recording medium in a state in which the forward path cam engagement portion is engaged with the second operating unit, and the forward path cam engagement portion of the moving cam be engaged with the first operating unit when the regulating member is moving from the non-contact location to the contact location according to the rotation of the driving motor, and the forward path cam engagement portion of the moving cam be engaged with the second operating unit when the regulating member has moved to the contact location.

Therefore, it is possible to regulate the rotation of the disc-shaped recording medium and move the print head with respect to the printing surface of the disc-shaped recording medium successively at suitable timing, and it is possible to ensure rapid operations and good printing state.

In a disc driving apparatus according to an embodiment of the present invention, a disc rotating mechanism for changing a printing location on the printing surface by rotating the disc-shaped recording medium during the non-printing state may be installed.

Therefore, it is possible to perform printing to a desired location of the printing surface of the disc-shaped recording medium, and it is also possible to improve the convenience in use.

In a disc driving apparatus according to an embodiment of the present invention, a disc rotating mechanism for changing a printing location on the printing surface by rotating the disc-shaped recording medium during the non-printing state may be installed, a rotating motor and a roller rotated by the rotating motor be installed to the disc rotating mechanism, and a roller rotating in the same direction as the rotation direction of the disc-shaped recording medium and moving away from or coming into contact with the outer circumference of the disc-shaped recording medium be used as the regulating member.

Therefore, it is possible to easily rotate the disc-shaped recording medium or to easily regulate the rotation of disc-shaped recording medium by rotating or stopping the roller.

Embodiments of the invention will now be described with reference to the accompanying drawings, throughout which like parts are referred to by like references, and in which:
Fig. 1 shows an embodiment of a disc driving apparatus according to the present invention along with Figs. 2 to 28, and Fig. 1 is a perspective view showing the disc driving apparatus.
Fig. 2 is a perspective view showing a disc-shaped recording medium in a state where a disc tray is ejected from the disc driving apparatus.
Fig. 3 is a schematic plan view showing a part of inner configuration as a cross section in the disc driving apparatus.
Fig. 4 is an exploded perspective view showing a print unit or the like.
Fig. 5 is a perspective view showing the print unit.
Fig. 6 is a plan view showing the print unit.
Fig. 7 is a front view showing the print unit.
Fig. 8 is a side view showing the print unit.
Fig. 9 is a rear view showing a support base and each member mounted thereto.
Fig. 10 is a perspective view showing a feeding base, a cam support lever, a head support lever, and components supported thereto.
Fig. 11 shows operations of the print unit along with Figs. 12 to 28, and Fig. 11 is a plan view showing an initial state.
Fig. 12 is a front view showing the initial state.
Fig. 13 is a side view showing the initial state.
Fig. 14 is a plan view showing the state just after a head feeding unit initially moves toward turnaround location from the initial state.
Fig. 15 is a front view showing the state just after the head feeding unit initially moves toward the turnaround location from the initial state.
Fig. 16 is a plan view showing the state in which the head feeding unit keeps moving toward the turnaround location from Fig. 14.
Fig. 17 is a front view showing the state in which the head feeding unit keeps moving toward the turnaround location from Fig. 15.
Fig. 18 is a schematic front view showing the state in which the print head is pressed to the printing surface of the disc-shaped recording medium.
Fig. 19 is a plane view showing the state in which the head feeding unit moves to the turnaround location.
Fig. 20 is a front view showing the state in which the head feeding unit moves to the turnaround location.
Fig. 21 is a side view showing the state in which the head feeding unit moves to the turnaround location.
Fig. 22 is a plane view showing the state in which the head feeding unit is moving from the turnaround location to the initial location.
Fig. 23 is a front view showing the state in which the head feeding unit is moving from the turnaround location to the initial location.
Fig. 24 is an enlarged plan view showing the state in which a moving cam slides into contact with a return cam.
Fig. 25 is a plan view showing the state in which the head feeding unit moves to the initial location.
Fig. 26 is a front view showing the state in which the head feeding unit moves to the initial location.
Fig. 27 is a plan view showing the state in which a driving motor rotates again and a roller comes in contact with the disc-shaped recording medium.
Fig. 28 is a plan view showing the state in which the disc-shaped recording medium is rotated by the rotation of the roller.

Hereinafter, various embodiments of a disc driving apparatus according to the present invention will be described with reference to the accompanying drawings.

In the following description, front, rear, upper, lower, right and left directions are defined while setting the thickness direction of a disc-shaped recording medium as the vertical direction.

In addition, the front, rear, upper, lower, right and left directions used herein are just for convenience, and the embodiments of the present disclosure are not limited to those directions.

### [Configuration of Disc Driving Apparatus]

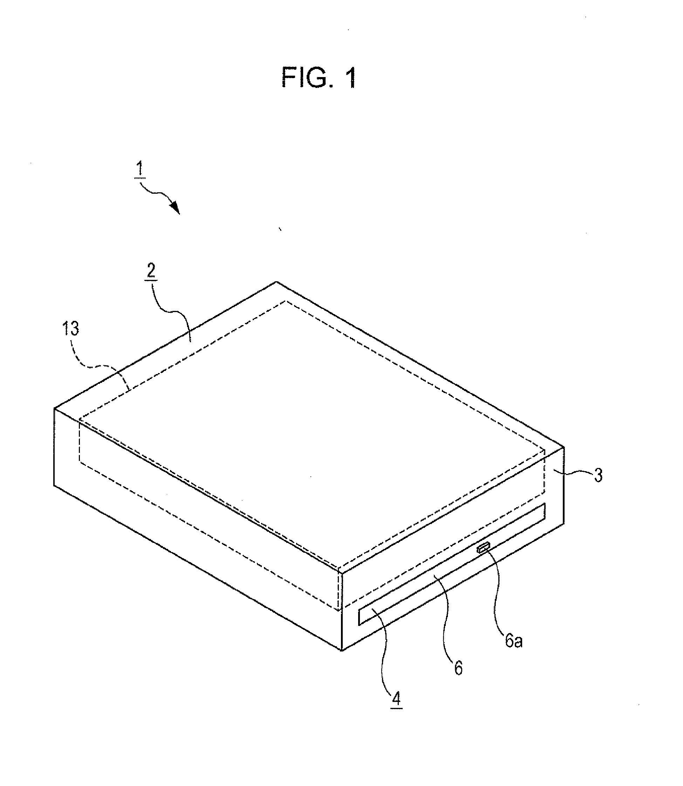

The disc driving apparatus 1 is configured by disposing necessary components in an outer housing 2 (see Figs. 1 to 3).

The outer housing 2 has a flat box shape with a vertical length shorter than a front and rear length and a right and left length, and has a tray insertion/extraction port 3a in a lower portion of a front surface portion 3.

A disc tray 4 is installed to the disc driving apparatus 1, and the disc tray 4 moves in the front and rear direction to be ejected from the outer housing 2 or be received in the outer housing 2 via the tray insertion/extraction port 3a. The disc tray 4 includes a tray body 5 and a front panel 6 mounted to the front surface of the tray body 5 and having a long lateral length.

A disc loading concave portion 5a opened upwards is formed in the tray body 5. The tray body 5 has a disposing hole 5b formed vertically.

A recording and reproducing unit 7 is disposed in the disposing hole 5b of the tray body 5. The recording and reproducing unit 7 includes a pickup base 8, a disc table 9 mounted to the pickup base 8, and an optical pickup 10 movably supported by the pickup base 8.

The recording and reproducing unit 7 is movable in the vertical direction. The disc table 9 is rotated by a spindle motor, not shown, and is located below a concave portion 5a for discs in the state in which the recording reproducing unit 7 is located at a downward moving terminal and located above the concave portion 5a for discs in the state in which the recording and reproducing unit 7 is located at an upward moving terminal.

The front panel 6 has a right end portion located right further to the tray body 5. A manipulation button 6a is disposed to the front panel 6. If the manipulation button 6a is manipulated in the state in which the disc tray 4 is received in the outer housing 2, it is possible for the disc tray 4 to forwards and be ejected from the outer housing 2 and for the disc-shaped recording medium 100 to be loaded to a loading concave portion 5a of the tray body 5. In the state in which the disc-shaped recording medium 100 is loaded to the loading concave portion 5a of the tray body 5, a part (a right end portion) of the disc-shaped recording medium 100 protrudes from the right side of the tray body 5.

If the manipulation button 6a is manipulated in the state in which the disc-shaped recording medium 100 is loaded to the loading concave portion 5a of the tray body 5 protruding from the outer housing 2, the disc tray 4 moves rearwards and is received in the outer housing 2. If the disc tray 4 is received in the outer housing 2, the recording and reproducing unit 7 moves upwards, the disc table 9 is inserted into a center hole 100a of the disc-shaped recording medium 100 from the below, and the disc-shaped recording medium 100 is mounted to the disc table 9.

In the state in which the disc-shaped recording medium 100 is mounted to the disc table 9, the disc-shaped recording medium 100 is located away from the tray body 5 upwards.

The disc-shaped recording medium 100 has a lower surface formed as a recording surface 101 on which information signals are recorded and an upper surface formed as a printing surface 102 on which printing is performed. The printing surface 102 is formed by, for example, attaching a thermal paper to the surface of the disc-shaped recording medium 100 or applying a printable paint by a print head (a thermal head).

If the manipulation button 6a is manipulated in the state in which the disc-shaped recording medium 100 is mounted to the disc table 9, the recording and reproducing unit 7 moves downwards, the disc table 9 moves below the disc loading concave portion 5a, and at this time the disc-shaped recording medium 100 is placed in the loading concave portion 5a so that the mounting of the disc-shaped recording medium 100 to the disc table 9 is released. Subsequently, the disc tray 4 moves forward and is ejected from the outer housing 2 so that the disc-shaped recording medium 100 may be extracted from the loading concave portion 5a.

In addition, though it has been described above that the recording and reproducing unit 7 moves in the vertical direction so as to mount the disc-shaped recording medium 100 to the disc table 9 and release the mounting, the recording and reproducing unit 7 may be configured not to move in the vertical direction, for example. In this case, in the state that the disc table protrudes upwards from the disc tray and that the disc tray is ejected from the outer housing in advance, the user mounts the disc-shaped recording medium to the disc table and releases the mounting.

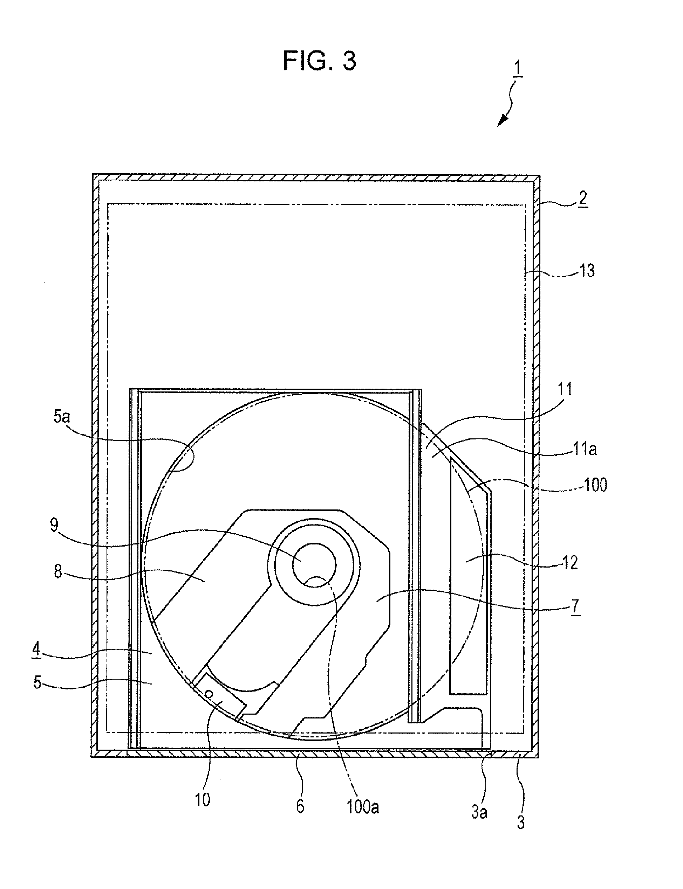

In the outer housing 2, a disposition base 11 is disposed at the right end portion (see Fig. 3). The disposition base 11 has a long shape in the front and rear direction, and is located at the right side of the disc tray 4 in the state in which the disc tray 4 is received in the outer housing 2. The disposition base 11 has an upper surface formed as a base surface 11a. A cushion member 12 made of, for example, rubber material or felt material is attached to a part of the base surface 11a.

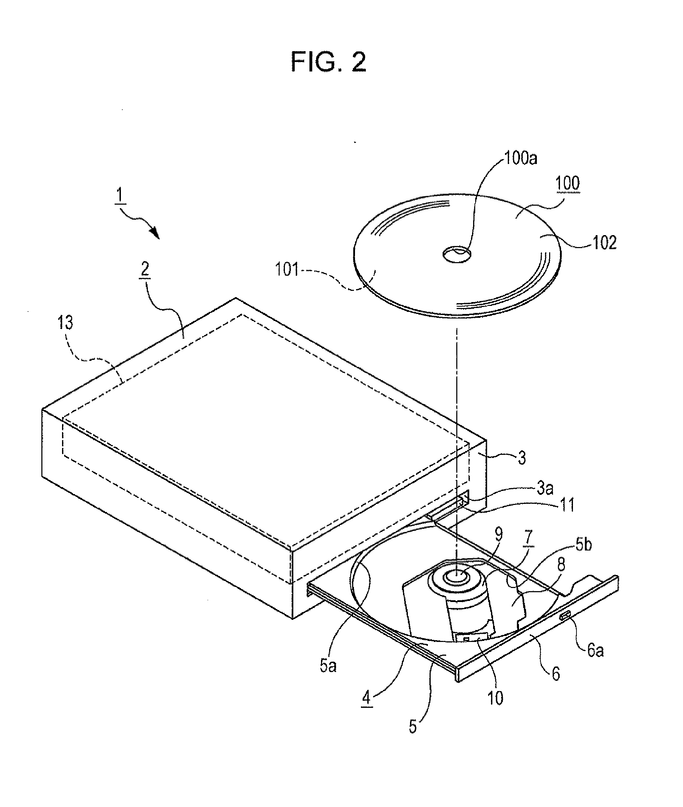

The print unit 13 is disposed above the recording and reproducing unit 7 in the outer housing 2 (see Figs. 2 and 3).

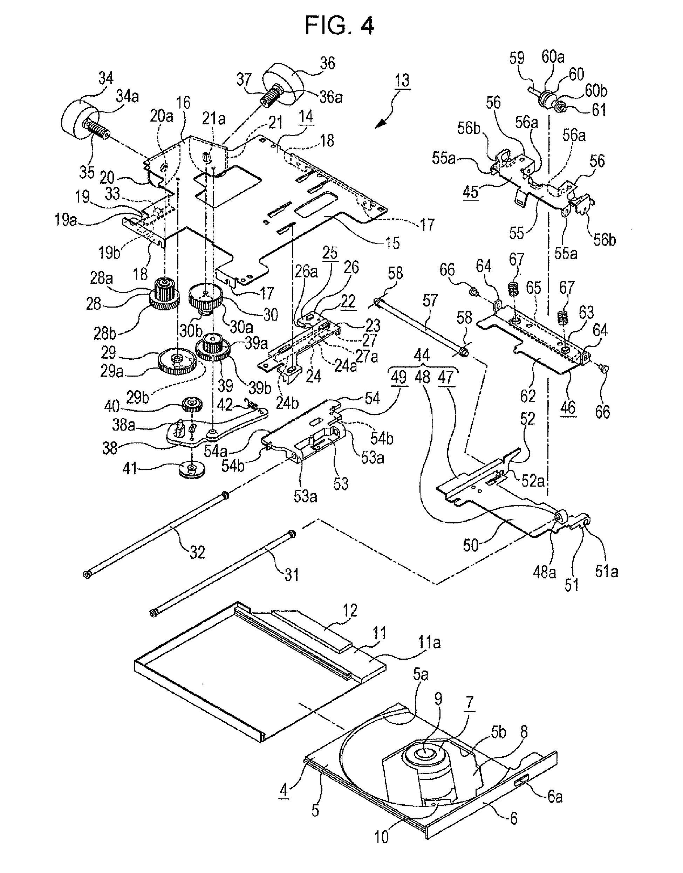

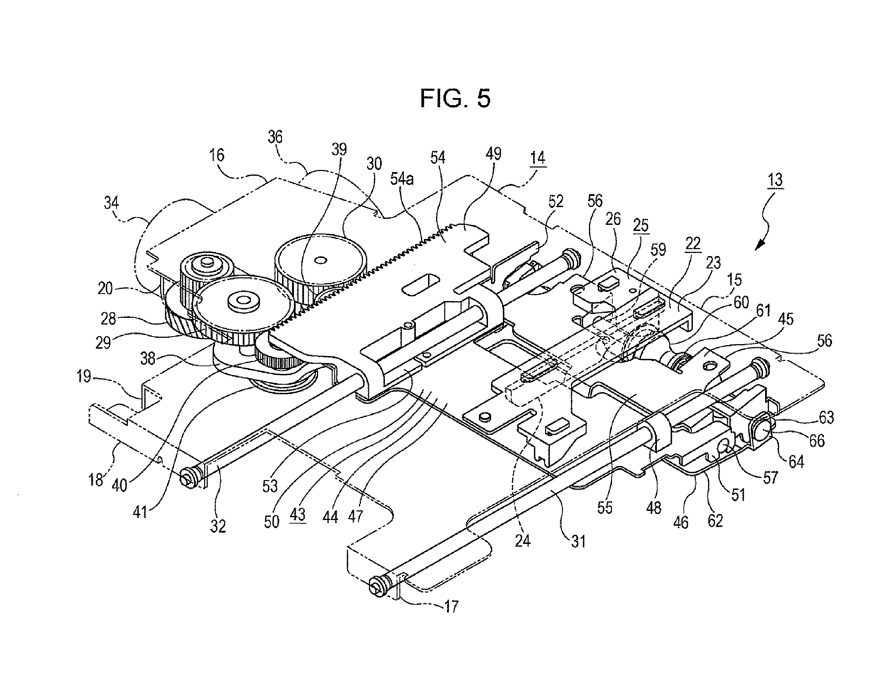

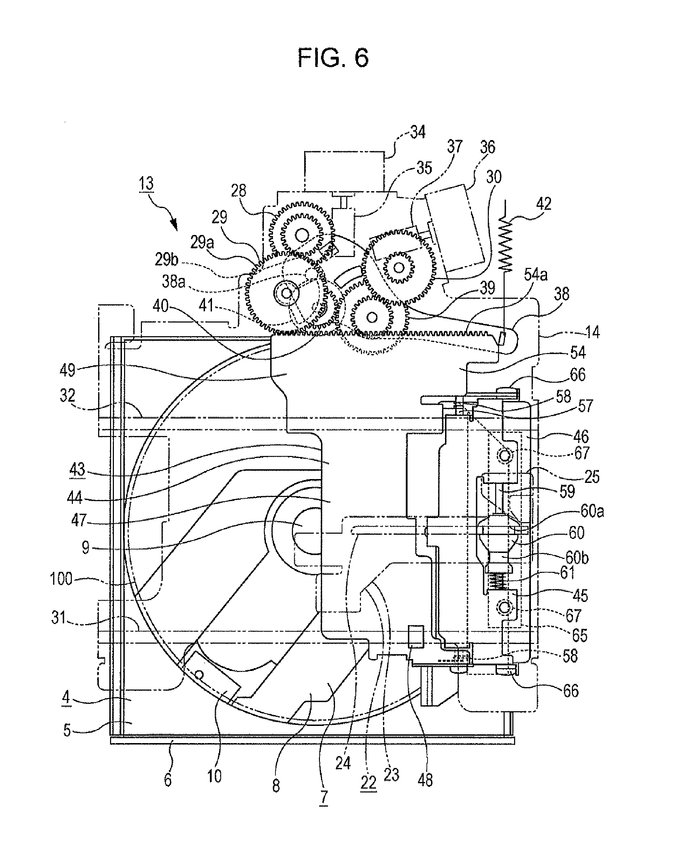

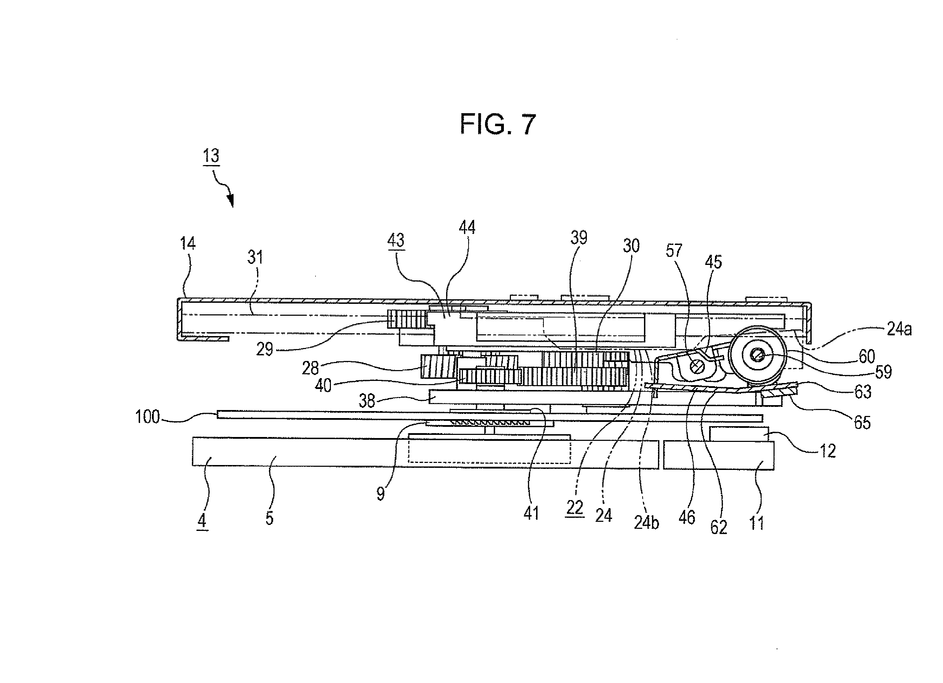

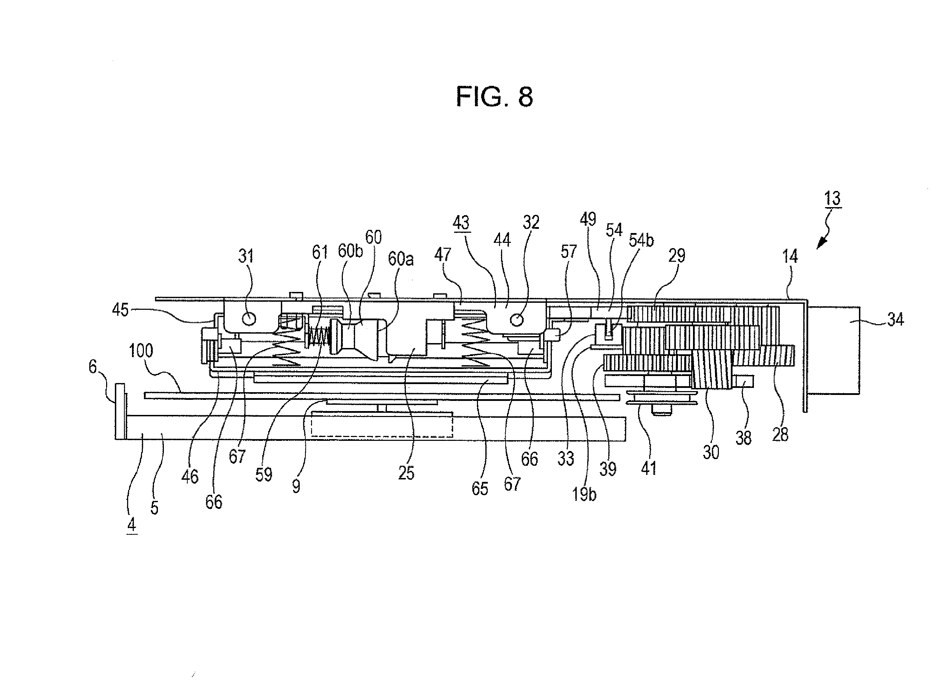

The print unit 13 is configured by supporting or mounting necessary members to the support base 14 (see Figs. 4 to 8).

The support base 14 is fixed at the upper end side in the outer housing 2.

The support base 14 includes a base portion 15 oriented upwards, a gear support portion 16 protruding rearwards from the base portion 15, shaft mounting portions 17 and 17, 18 and 18 respectively protruding downwards from the base portion 15, a sensor mounting portion 19 protruding downwards from the base portion 15, and motor mounting portions 20 and 21 respectively protruding downwards from the gear support portion 16.

The gear support portion 16 protrudes rearwards from the center portion of the base portion 15 in the right and left direction.

The shaft mounting portions 17 and 17 respectively protrude downwards from the locations at the front end side of both right and left edges of the base portion 15, and the shaft mounting portions 18 and 18 respectively protrude rearwards at the locations of the rear end side of both right and left edges of the base portion 15.

The sensor mounting portion 19 includes a connection surface portion 19a protruding downwards at a location of the left end side of the rear circumference of the base portion 15 and a mounting surface portion 19b protruding forwards from the lower circumference of the connection surface portion 19a.

The motor mounting portion 20 protrudes downwards from the lower circumference of the gear support portion 16, and the motor mounting portion 21 protrudes downwards from the right edge of the gear support portion 16. Insert holes 20a and 21a are respectively formed in the motor mounting portions 20 and 21.

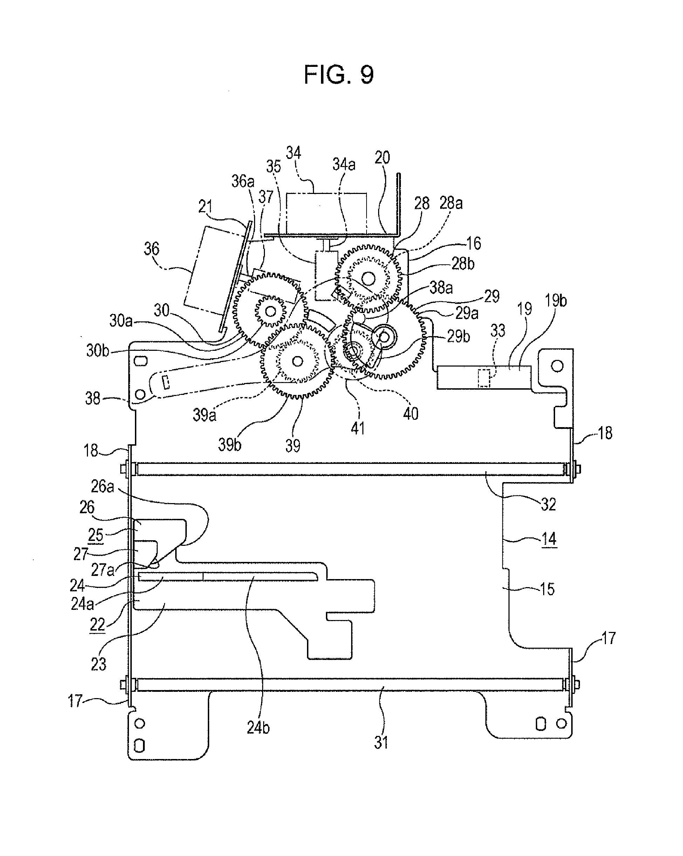

A guide cam 22 is mounted to the right end side of the lower surface of the base portion 15 of the support base 14 (see Fig. 9). The guide cam 22 is formed with a shape extending in the left and right direction, and includes a mounted surface portion 23 having a plate shape oriented in the vertical direction and a cam guide portion 24 protruding downwards from the mounted surface portion 23 and having a plate shape oriented in the front and rear direction. The cam guide portion 24 extends in the left and right direction, the right end portion of the cam guide portion 24 is installed as a first operating unit 24a, and the cam guide portion 24 includes the first operating unit 24 and a second operating unit 24b extending from the left end of the first operating unit 24a. The second operating unit 24b protrudes downwards greater than the first operating unit 24a, and the first operating unit 24a is formed to protrude further downwards closer to the second operating unit 24b.

A return cam 25 is mounted to the lower surface of the base portion 15 at the right end portion thereof just behind the guide cam 22. The return cam 25 includes an upper guide portion 26 and a lower guide portion 27, and guide surfaces 26a and 27a inclined to displace forwards while moving to the right are respectively formed at the upper guide portion 26 and the lower guide portion 27.

A transmission gear 28, a feeding gear 29 and a stepped gear 30 are respectively rotatably supported on the gear support portion 16 of the support base 14.

The transmission gear 28 and the feeding gear 29 are located at the left end portion of the gear support portion 16 in order from the rear side, and are located at the lower surface side of the gear support portion 16. The transmission gear 28 has a small diameter portion 28a and a large diameter portion 28b. The feeding gear 29 includes a gear portion 29a and an operating unit 29b installed to the lower surface of the gear portion 29a, and the operating unit 29b is installed from the center portion of the gear portion 29a over the outer circumference thereof in a state of protruding downwards from the gear portion 29a. The small diameter portion 28a of the transmission gear 28 is engaged with the gear portion 29a of the feeding gear 29.

The stepped gear 30 is located at the lower surface side of the right end portion of the gear support portion 16, and has a large diameter portion 30a and a small diameter portion 30b.

Guide shafts 31 and 32 functioning as guide members are respectively mounted between shaft mounting portions 17 and 17 and shaft mounting portions 18 and 18 of the support base 14 (see Figs. 4 to 8). The guide shafts 31 and 32 are disposed to extend in parallel to each other to the left and right.

A location detection sensor 33 is mounted to the mounting surface portion 19b of the sensor attaching portion 19 of the support base 14.

A driving motor 34 is mounted to the rear surface of the motor attaching portion 20 of the support base 14. A worm 35 is fixed to a motor shaft 34a of the driving motor 34. The worm 35 is inserted into the insert hole 20a, is located at the front of the motor mounting portion 20, and is engaged with the large diameter portion 28b of the transmission gear 28.

A rotating motor 36 is mounted to the right side surface of the motor attaching portion 21 of the support base 14. A worm 37 is fixed to the motor shaft 36a of the rotating motor 36. The worm 37 is inserted into the insert hole 21a, is located at the left side of the motor mounting portion 21, and is engaged with the small diameter portion 30b of the stepped gear 30.

An operation lever 38 is pivotally supported at the rear end portion of the base portion 15 of the support base 14. The operation lever 38 is shaped to extend substantially left and right, and an approximately central portion in the right and left direction becomes a pivotal point. An operated protrusion 38a protruding upwards is installed at a location of the left end side of the operation lever 38, and the operated protrusion 38a may be engaged with a regulating portion 29b of the feeding gear 29.

An intermediate gear 39 is rotatably supported at the pivotal point of the operation lever 38. The intermediate gear 39 includes a small diameter portion 39a and a large diameter portion 39b. The small diameter portion 39a of the intermediate gear 39 is engaged with the large diameter portion 30a of the stepped gear 30.

A driven gear 40 and a roller 41 functioning as a regulating member regulating the rotation of the disc-shaped recording medium 100 are supported by the operation lever 38 at the left side of the intermediate gear 39 to be coaxially rotatable, and the driven gear 40 and the roller 41 integrally rotate. The driven gear 40 is located at the upper surface side of the operation lever 38, and the roller 41 is located at the lower surface side of the operation lever 38. The driven gear 40 is engaged with the large diameter portion 39b of the intermediate gear 39.

Therefore, if the rotating motor 36 rotates, its driving force is transferred to the worm 37, the stepped gear 30 and the intermediate gear 39 in order, and the driven gear 40 and the roller 41 rotate integrally.

The right end portion of the operation lever 38 is biased in a pivoting direction to move substantially rearwards by a tension coil spring 42 supported between the right end portion and a spring mounting portion, not shown.

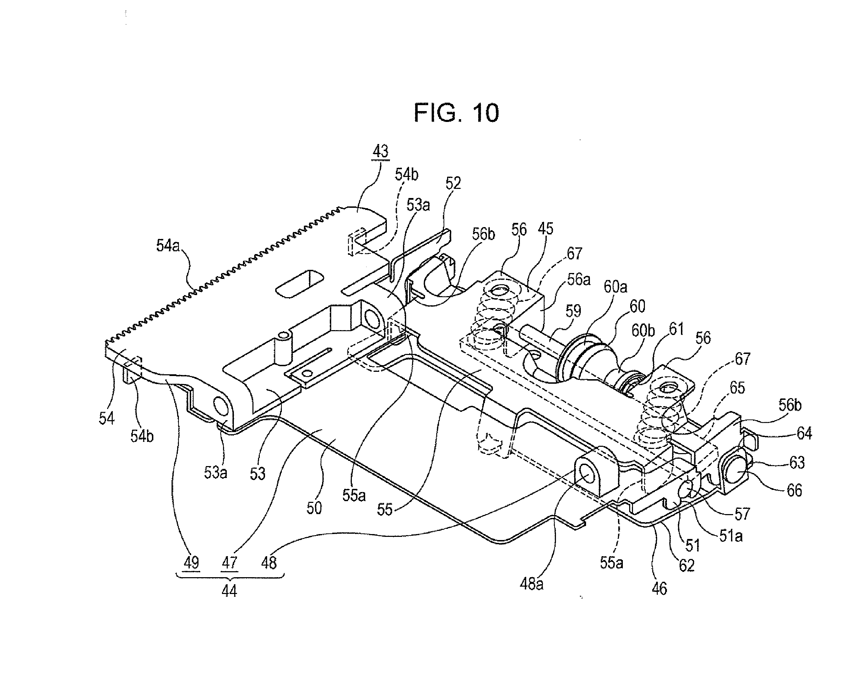

A head feeding unit 43 is slidably supported to the guide shafts 31 and 32. The head feeding unit 43 includes, as shown in Figs. 4 and 10, a feeding base 44, a cam support lever 45 pivotally supported to the feeding base 44, and a head support lever 46 pivotally supported to the support lever 45.

The feeding base 44 includes a base plate 47, a bearing member 48 mounted to the front end portion of the base plate 47, and a coupling member 49 mounted to the rear end portion of the base plate 47.

The base plate 47 includes a base surface portion 50 extending in the vertical direction, and side surface portions 51 and 52 respectively protruding upwards from both front and rear edges of the base surface portion 50. Support portions 51a and 52a are respectively installed to the right end sides of the side surface portion 51 and 52.

The bearing member 48 is mounted to the front end portion in the upper surface of the base surface portion 50, and has a bearing portion 48a.

The coupling member 49 includes an attached portion 53 extending in the left and right direction, and a rack portion 54 protruding upwards from the upper end portion of the attached portion 53. Bearing portions 53a and 53a are respectively installed to both right and left end portions of the attached portion 53. The rear end portion of the rack portion 54 is formed as a rack 54a. Detecting protrusions 54b and 54b protruding downwards are installed to the lower surface of the rear end portion of the rack portion 54, and the detecting protrusions 54b and 54b are installed at both right end left end portions.

The cam support lever 45 includes a base plate portion 55 extending in the vertical direction, and protruding plate portions 56 and 56 protruding in a right direction from both front and rear end portions of the base plate portion 55.

Supported portions 55a and 55a protruding downwards are respectively installed to both front and rear end portions of the base plate portion 55.

Cam support portions 56a and 56a protruding downwards are respectively installed to the inner circumferences of the protruding plate portions 56 and 56, and support portions 56b and 56b protruding downwards are respectively installed to the outer circumferences. The support portions 56b and 56b are located further to the outer side than the supported portions 55a and 55a.

The cam support lever 45 is pivotally supported to the feeding base 44. A pivoting support shaft 57 extending in the front and rear direction is mounted between the support portions 51a and 51a of the feeding base 44, the pivoting support shaft 57 is inserted into the supported portions 55a and 55a, and the cam support lever 45 is supported to the feeding base 44. Therefore, the cam support lever 45 is pivotal on the pivoting support shaft 57 with respect to the feeding base 44.

Spring members 58 and 58 are supported to both front and rear end portions of the pivoting support shaft 57, and for example distortion coil springs are used as the spring members 58 and 58. The cam support lever 45 is biased by the spring members 58 and 58 in a pivoting direction in which the protruding plate portions 56 and 56 move substantially upwards.

A cam support shaft 59 extending in the front and rear direction is mounted between the cam support portions 56a and 56a of the protruding plate portions 56 and 56, and a moving cam 60 is supported to the cam support shaft 59 to be rotatable in the axis rotation direction or to be movable in the axial direction.

The moving cam 60 has an forward path cam engagement portion 60a formed with a groove shape extending in the circumferential direction, and a return path cam engagement portion 60b formed with a groove shape in the circumferential direction and having a smaller diameter than the forward path cam engagement portion 60a, the forward path cam engagement portion 60a and the return path cam engagement portion 60b are spaced apart from each other at front and rear locations. As described above, since the cam support lever 45 is biased by the spring members 58 and 58 in a pivoting direction in which the protruding plate portions 56 and 56 move substantially upwards, the moving cam 60 located between the cam support portions 56a and 56a is biased substantially upwards by the spring members 58 and 58.

A bias spring 61 is supported to the cam support shaft 59 at a front side of the moving cam 60, and, for example, a compression coil spring is used as the bias spring 61. The moving cam 60 is biased rearwards by the bias spring 61.

The head support lever 46 includes a base portion 62 oriented in the vertical direction, a head mounting portion 63 protruding in a slight upper diagonal direction from the right edge of the base portion 62, and supported portions 64 and 64 protruding upwards respectively from both front and rear rims of the head mounting portion 63. A print head 65 is mounted to the lower surface of the head mounting portion 63. For example, a thermal head is used as the print head 65.

The head support lever 46 is pivotally supported to the cam support lever 45. Fulcrum shafts 66 and 66 extending in the front and rear direction are respectively mounted to the support portions 56b and 56b of the cam support lever 45, the fulcrum shafts 66 and 66 are inserted into the supported portions 64 and 64, and the head support lever 46 is supported to the cam support lever 45. Therefore, the head support lever 46 is pivotal with respect to the cam support lever 45 based on the fulcrum shafts 66 and 66.

Pressing springs 67 and 67 spaced apart in the front and rear direction are supported between the protruding plate portions 56 and 56 of the cam support lever 45 and the head mounting portion 63 of the head support lever 46, and, for example, compression coil springs are used as the pressing springs 67 and 67. The head support lever 46 is biased by the pressing springs 67 and 67 in a pivoting direction in which the head mounting portion 63 moves substantially downwards, and is biased in a direction in which the print head 65 mounted to the head mounting portion 63 moves substantially downwards.

The head feeding unit 43 is slidably supported by the guide shafts 31 and 32 by the bearing portion 48a of the bearing member 48 and the bearing portions 53a and 53a of the coupling member 49, and is guided by the guide shafts 31 and 32 to be movable in the left and right direction.

The rack 54a of the coupling member 49 is engaged with a gear portion 29a of the feeding gear 29 supported to the support base 14. Therefore, if the driving motor 34 rotates, its driving force is transferred to a worm 35, a transmission gear 28, a feeding gear 29 and a coupling member 49 in order, and the head feeding unit 43 is guided by the guide shafts 31 and 32 to move in the left and right direction.

The head feeding unit 43 reciprocates by the driving force of the driving motor 34 between an initial location which is a right moving end and turnaround location which is a left moving end, and at this time the print head 65 reciprocates between a first location which is a right moving end and a second location which is a left moving end.

### [Printing Operation of the Print Unit]

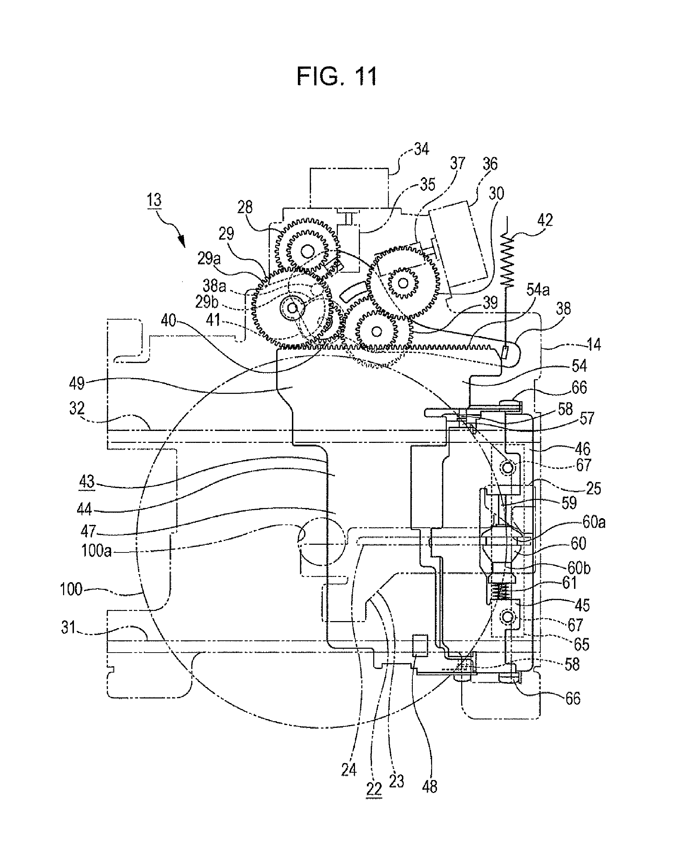

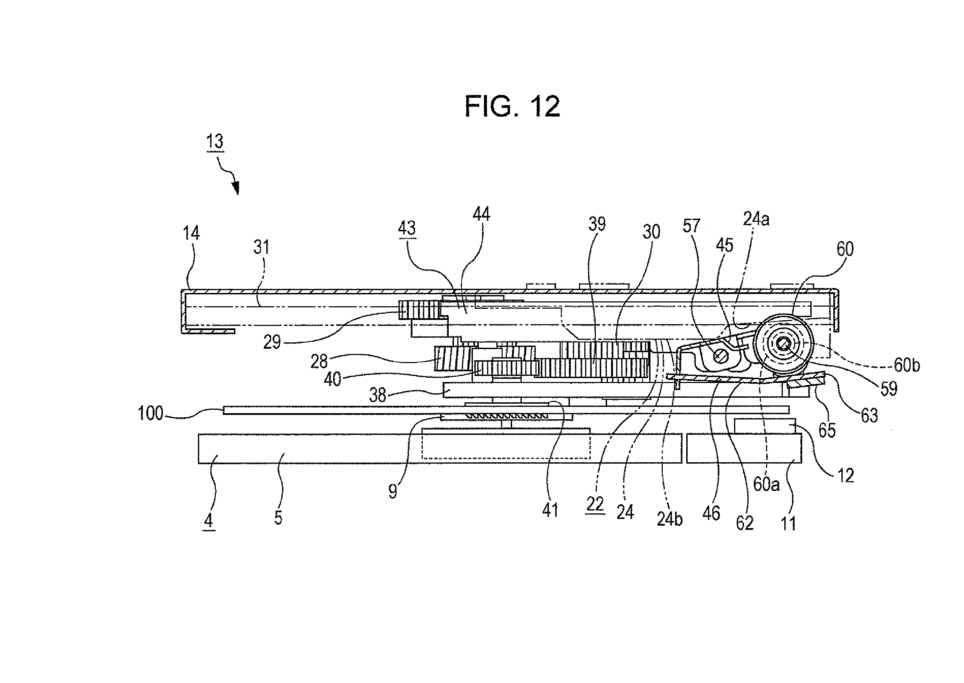

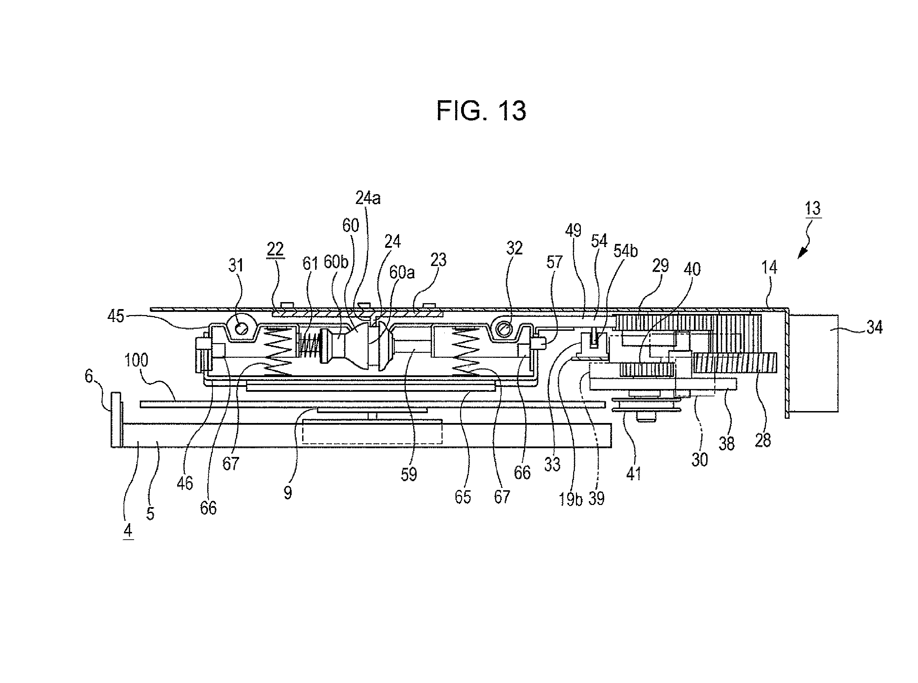

Hereinafter, printing operations of the print unit 13 will be described (see Figs. 11 to 28).

First, an initial state (home position) of the print unit 13 before the printing operations are performed will be described (see Figs. 11 to 13).

In an initial state, the feeding gear 29 is maintained at a predetermined location, the operating unit 29b is engaged to the operated protrusion 38a of the operation lever 38 from the front side, and the operation lever 38 is maintained at one pivotal end against the biasing force of the tension coil spring 42. At this time, the roller 41 supported to the operation lever 38 is spaced apart from the outer circumference of the disc-shaped recording medium 100 in a rear direction and is supported at a non-contact location not contacting the outer circumference of the disc-shaped recording medium 100.

In the initial state, the head feeding unit 43 is supported at the initial location which is the right moving end. At this time, the moving cam 60 is supported at the right moving end, and the forward path cam engagement portion 60a is engaged with the right end portion of the first operation unit 24a of the cam guide portion 24 of the guide cam 22. The location at which the forward path cam engagement portion 60a of the moving cam 60 movable in the front and rear direction is engaged with the cam guide portion 24 becomes a first engagement location in the movement range in the front and rear direction, and the location at which the return path cam engagement portion 60b of the moving cam 60 is engaged with the cam guide portion 24 becomes a second engagement location.

In the initial state, one detecting protrusion 54b installed to the coupling member 49 of the head feeding unit 43 is located corresponding to the location detection sensor 33, and the location detection sensor 33 detects that the head feeding unit 43 is present at the initial location.

In the initial state, since the forward path cam engagement portion 60a of the moving cam 60 is engaged with the first operating unit 24a of the cam guide portion 24, the head support lever 46 supported to the cam support lever 45 is located at an upper side in the vertical movement range. Therefore, the print head 65 mounted to the head support lever 46 is located spaced apart from the printing surface 102 of the disc-shaped recording medium 100.

In the initial state, if the driving motor 34 rotates in one direction, the head feeding unit 43 moves to the left from the initial location to the turnaround location and initiates the reciprocating operation.

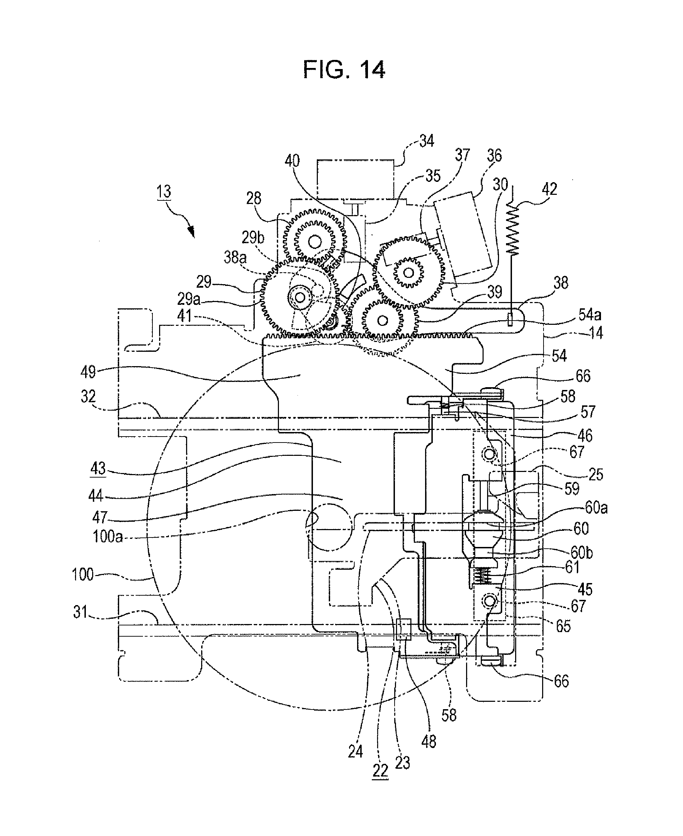

If the driving motor 34 rotates in one direction, the feeding gear 29 rotates so that the operating unit 29b moves substantially in a front direction. The operation lever 38 is pivoted by the biasing force of the tension coil spring 42 in a direction in which the operated protrusion 38a follows the operating unit 29b so that the roller 41 moves substantially in a front direction, and the roller 41 is pressed by the outer circumference of the disc-shaped recording medium 100 to reach a contact location (see Fig. 14). Therefore, the rotation of the disc-shaped recording medium 100 is regulated by the roller 41.

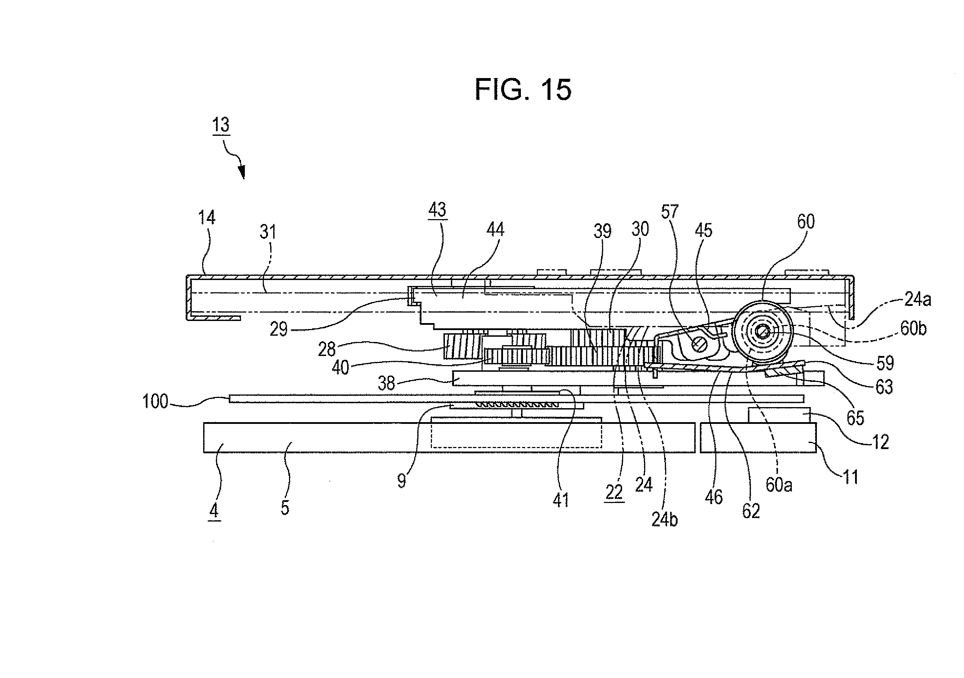

Since the cam support lever 45 is biased by the spring members 58 and 58 in a pivoting direction of moving substantially upwards, the moving cam 60 rotates with respect to the cam support shaft 59 in a state in which the forward path cam engagement portion 60a is pressed to the first operating unit 24a of the cam guide portion 24, and is engaged with the left end portion of the first operating unit 24a (see Fig. 15). Since the first operating unit 24a is formed to protrude further downwards closer to the second operating unit 24b as described above, the print head 65 gradually moves downwards along with the left movement of the head feeding unit 43 and becomes closer to the printing surface 102 of the disc-shaped recording medium 100.

As described above, since the cam support lever 45 is biased by the spring members 58 and 58 in a pivoting direction moving substantially upwards, the moving cam 60 typically maintains an engaged state with the cam guide portion 24.

Therefore, it is possible that the moving cam 60 is typically engaged with the cam guide portion 24 by a simple configuration, and it is possible to improve the precision of operations without increasing product costs.

In addition, it is possible that the engagement of the moving cam 60 to the cam guide portion 24 is not released while the head feeding unit 43 is moving, and it is possible to improve the reliability in operations of the print unit 13.

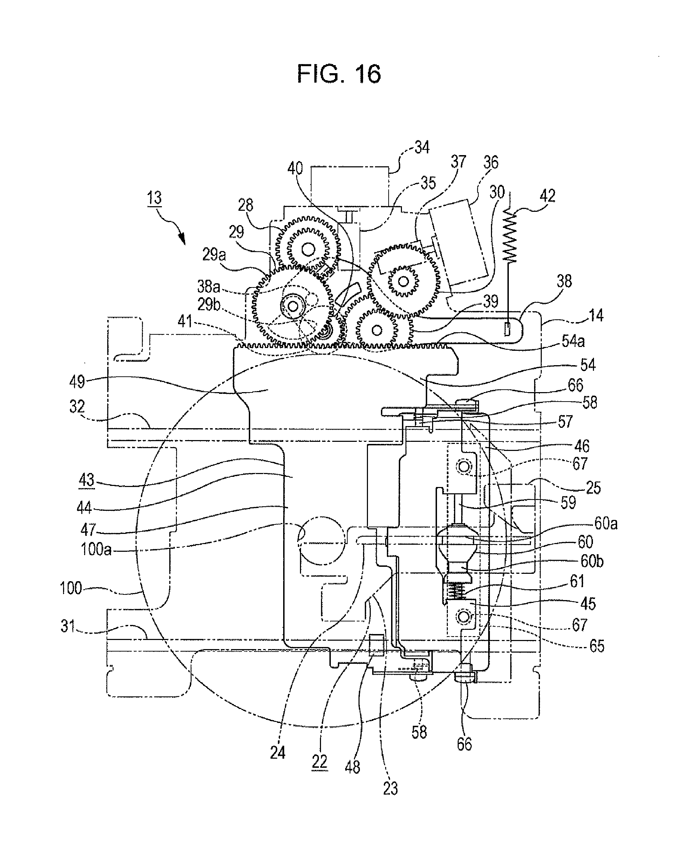

Subsequently, the head feeding unit 43 moves to the left according to the rotation of the driving motor 34, and the operating unit 29b is spaced apart from the operated protrusion 38a of the operation lever 38 as the feeding gear 29 keeps rotating (see Fig. 16). Therefore, the roller 41 maintains a pressed state to the outer circumference of the disc-shaped recording medium 100, and the rotation of the disc-shaped recording medium 100 maintains regulation by the roller 41.

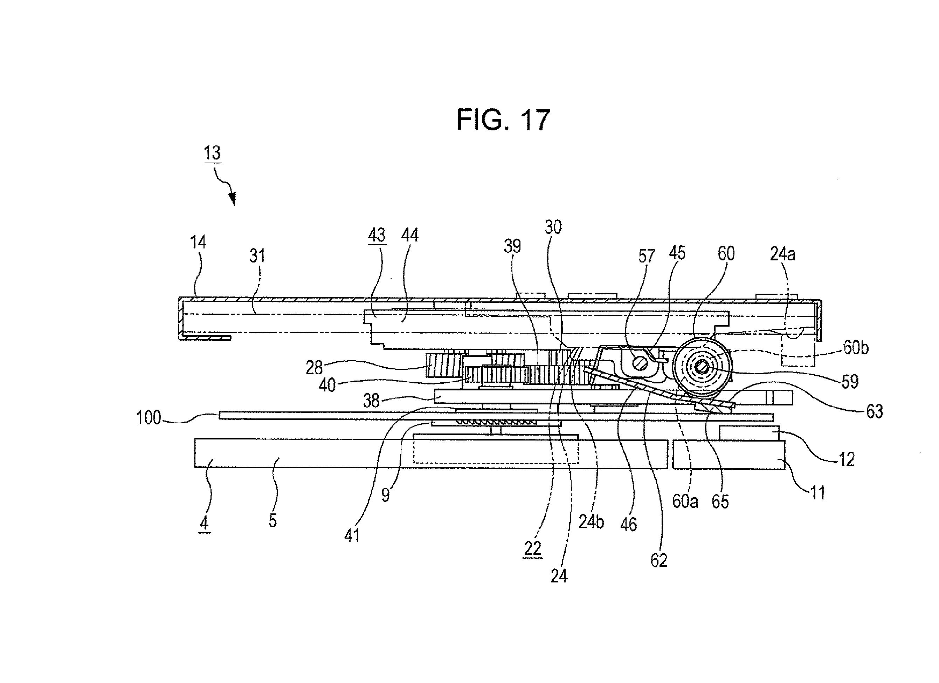

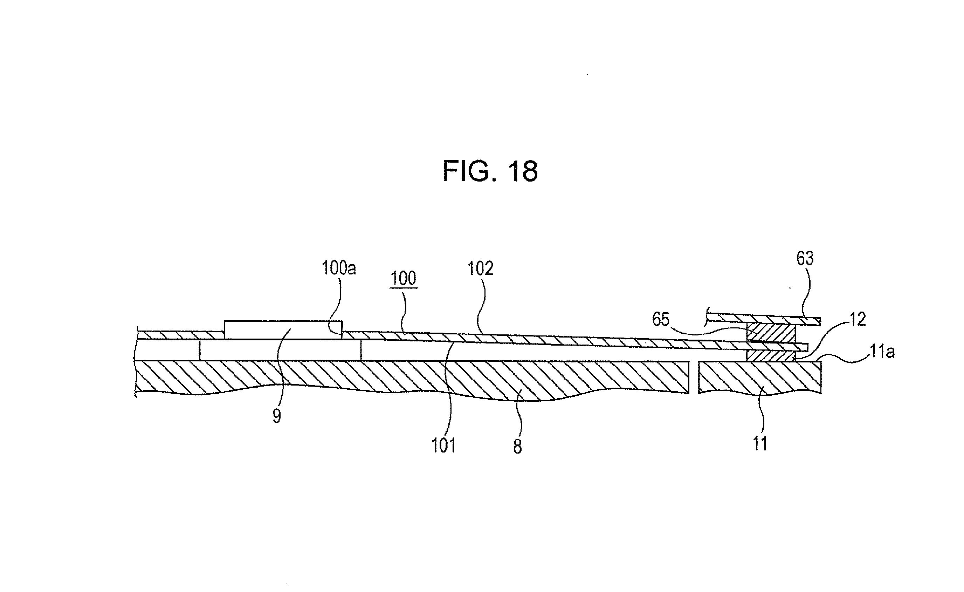

The forward path cam engagement portion 60a of the moving cam 60 is engaged with the right end portion of the second operating unit 24b of the cam guide portion 24 (see Fig. 17). Therefore, the print head 65 moves downwards and contacts the outer circumference of the printing surface 102 of the disc-shaped recording medium 100, thereby initiating the printing by the print head 65 to the printing surface 102. In a state in which the print head 65 is moved downwards, as shown in Fig. 18, the print head 65 is pressed from the above by the printing surface 102 of the disc-shaped recording medium 100 so that the disc-shaped recording medium 100 comes to a bent state, and the outer circumference of the disc-shaped recording medium 100 is pressed to a cushion member 12 attached to the base surface 11 of the disposition base 11.

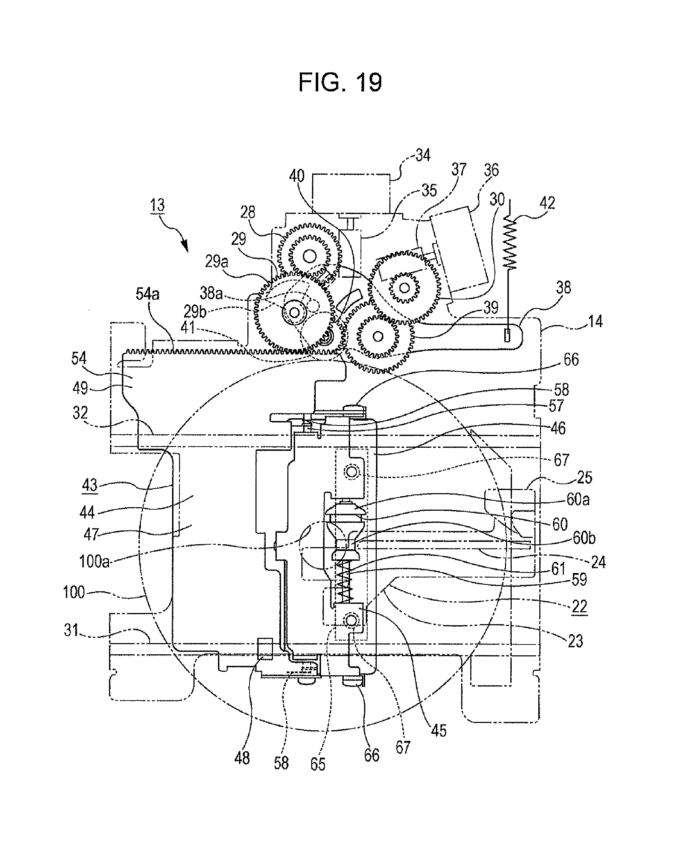

By the rotation of the driving motor 34, the head feeding unit 43 continuously moves to the left to the turnaround location (see Fig. 19). If the head feeding unit 43 moves to the left moving end, the other detecting protrusion 54b installed to the coupling member 49 of the head feeding unit 43 is located corresponding to the location detection sensor 33, the location detection sensor 33 detects that the head feeding unit 43 is moving to the turnaround location, and the rotation of the driving motor 34 is temporarily stopped.

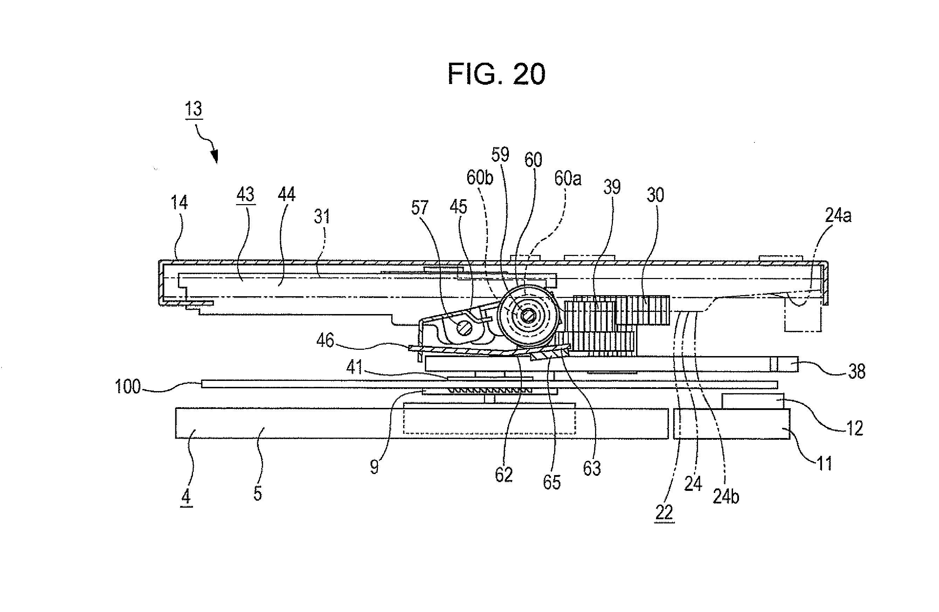

When the head feeding unit 43 moves to turnaround location, the moving cam 60 rotates in a state in which the forward path cam engagement portion 60a is pressed to the second operating unit 24b of the cam guide portion 24. The moving cam 60 moves to the left moving end as the head feeding unit 43 moves to the turnaround location (see Fig. 20). During this process, the print head 65 contacts the printing surface 102 of the disc-shaped recording medium 100, and the print head 65 performs printing to the printing surface 102. At this time, though the pressure of the print head 65 to the printing surface 102 varies due to the process accuracy of each component, the change of a bent state of the disc-shaped recording medium 100, or the like, the pressing force of the print head 65 to the printing surface 102 is absorbed by the pressing springs 67 and 67, and the pressure of the print head 65 to the printing surface 102 is maintained at a suitable level.

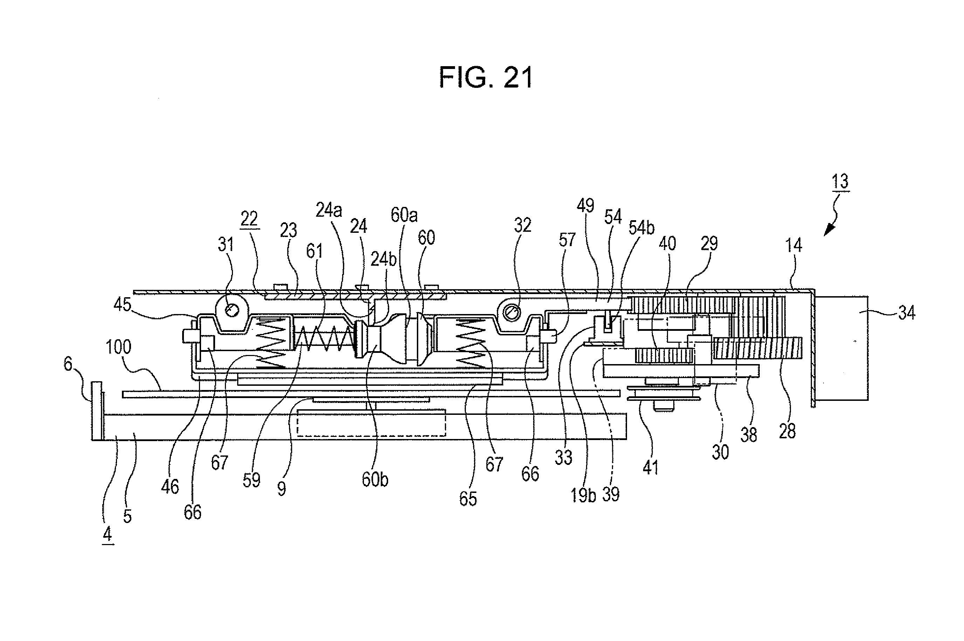

When the head feeding unit 43 is moved to the turnaround location, the forward path cam engagement portion 60a of the moving cam 60 moves to the left from the second operating unit 24b of the cam guide portion 24, and the engagement with the cam guide portion 24 is released (see Fig. 19). Therefore, the moving cam 60 moves rearwards by the biasing force of the bias spring 61 and is supported at the second engagement location, and the return path cam engagement portion 60b is located at the left side of the second operating unit 24b of the cam guide portion 24 (see Figs. 19 and 21).

Since the engagement of the moving cam 60 with the cam guide portion 24 is released when the head feeding unit 43 moves to the turnaround location, the cam support lever 45 and the head support lever 46 move substantially upwards by the biasing force of the spring members 58 and 58, the print head 65 is located spaced apart upwards from the printing surface 102 of the disc-shaped recording medium 100, and the printing by the print head 65 to the printing surface 102 ends.

When the print head 65 performs printing to the printing surface 102 of the disc-shaped recording medium 100, the rotation of the disc-shaped recording medium 100 is regulated by the roller 41 functioning as a regulating member. Therefore, the disc-shaped recording medium 100 does not rotate when the print head 65 performs printing, and it is possible to ensure a good printing state of the print head 65 to the printing surface 102.

As described above, if the location detection sensor 33 detects that the head feeding unit 43 moves to the turnaround location, the driving motor 34 reverses its rotation direction to rotate in the other direction.

Due to the rotation of the driving motor 34 in the other direction, the head feeding unit 43 moves in a right direction from the turnaround location to the initial location, and the operation of the return path is initiated. In the return path, the operations of a non-printing state in which the printing head 65 does not perform printing to the printing surface 102 of the disc-shaped recording medium 100 is executed.

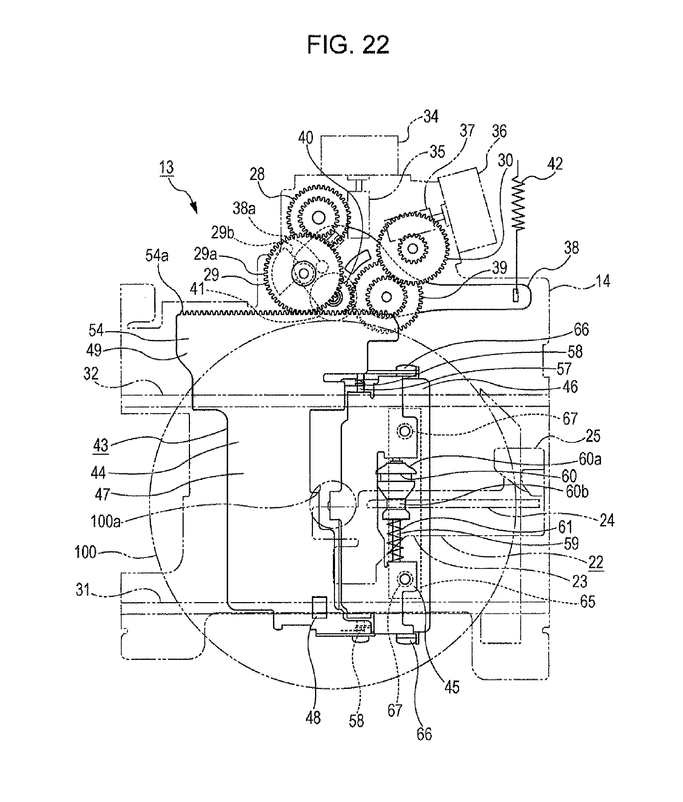

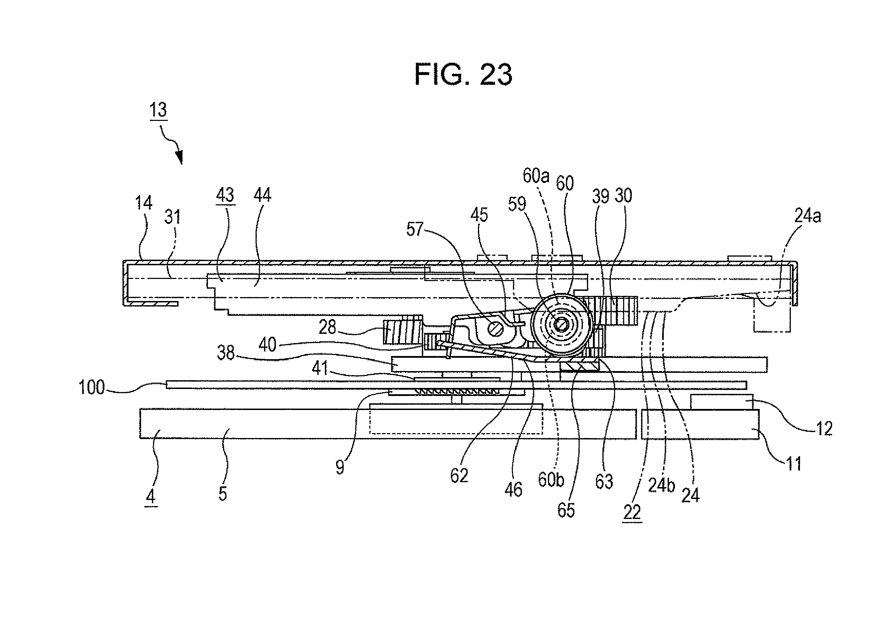

When the head feeding unit 43 moves in a right direction from the turnaround location, the moving cam 60 rotates in a state in which the return path cam engagement portion 60b is pressed to the second operating unit 24b of the cam guide portion 24 (see Figs. 22 and 23). At this time, the print head 65 moves in a right direction between the guide shafts 31 and 32 and the printing surface 102 in a state of being supported at a location spaced upwards from the printing surface 102.

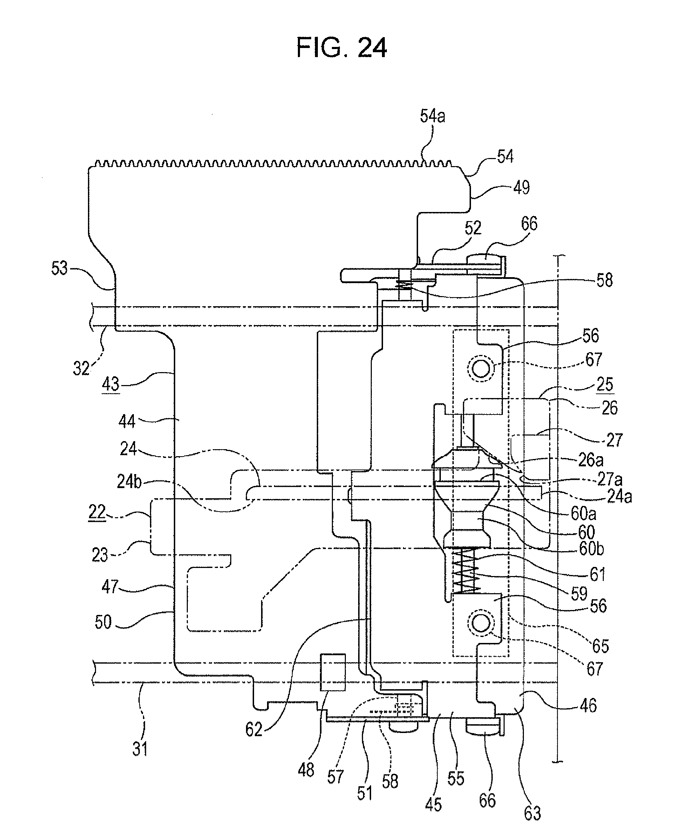

When the head feeding unit 43 moves in a right direction and the return path cam engagement portion 60b of the moving cam 60 is engaged from the second operating unit 24b of the cam guide portion 24 to the first operating unit 24a, the rear end portion of the moving cam 60 is successively slid on the guide surface 26a and the guide surface 27a of the return cam 25 (see Fig. 24). Therefore, the moving cam 60 moves forwards against the biasing force of the bias spring 61 as moving in a right direction.

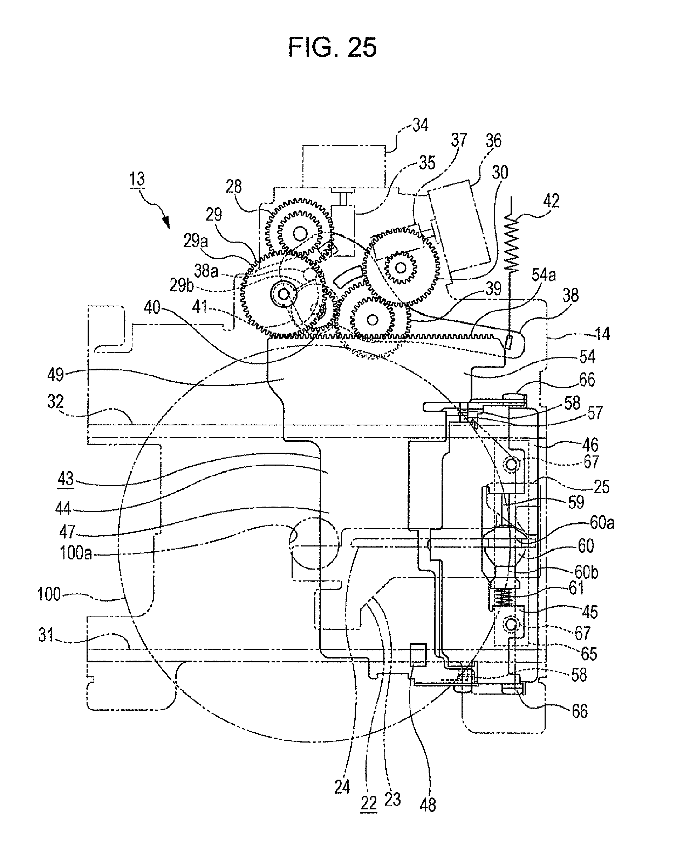

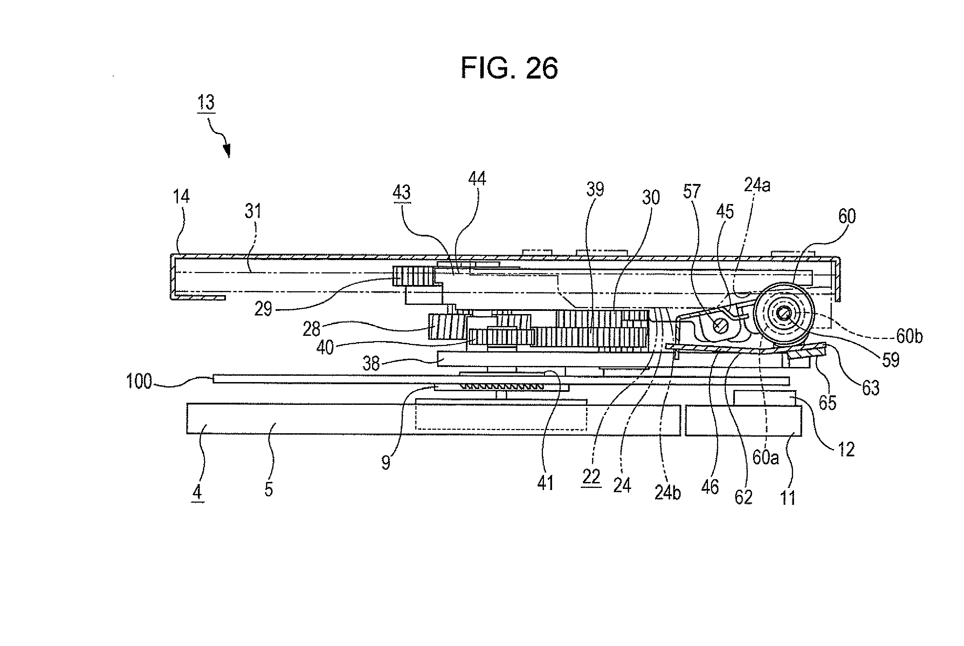

By the rotation of the driving motor 34, the head feeding unit 43 successively moves in a right direction and reaches the initial location (see Figs. 25 and 26). If the head feeding unit 43 moves to the initial location, the print head 65 is supported to the right moving end. In addition, just before the head feeding unit 43 moves to the initial location, the moving cam 60 slides on the return cam 25 as moving in a right direction, and moves forwards. Therefore, when the head feeding unit 43 moves to the initial location, the forward path cam engagement portion 60a is engaged with the first operating unit 24a of the cam guide portion 24 and reaches the first engagement location.

As described above, in the disc driving apparatus 1, in the initial location, the return cam 25 for switching an engagement location of the moving cam 60 to the cam guide portion 24 is installed, and the moving cam 60 is forced to return to the first engagement location.

Therefore, dedicated power is not necessary to return the moving cam 60 to the first engagement location, and the moving cam 60 may be reliably moved to the first engagement location by a simple configuration as the head feeding unit 43 moves toward the initial location.

In addition, in the disc driving apparatus 1, the moving cam 60 is supported to the cam support shaft 59 to be rotatable in the axis rotation direction or to be movable in the axial direction.

Therefore, since the moving cam 60 moves in the left and right direction in a state of being rotated with respect to the cam guide portion 24, the load of the driving motor 34 for moving the head feeding unit 43 is small, and it is possible to design the driving motor 34 with a reduced size by the same amount, and therefore the disc driving apparatus 1 may be designed with a small size.

In addition, since the moving cam 60 moves in a state of being rotated with respect to the cam guide portion 24, the moving cam 60 may be moved smoothly.

Moreover, since the moving cam 60 may be rotatable or movable in an axial direction by only one cam support shaft 59, it is possible to decrease the number of components and simplify the apparatus.

Further, since the moving cam 60 and the bias spring 61 are supported to the cam support shaft 59, dedicated members for supporting the moving cam 60 and the bias spring 61 respectively are not necessary, and the effective utilization of the disposing space allows a smaller design and decreases the number of components.

If the head feeding unit 43 moves to the right moving end, one detecting protrusion 54b installed to the coupling member 49 is located corresponding to the location detection sensor 33, and the location detection sensor 33 detects that the head feeding unit 43 is present at the initial location. Therefore, the rotation of the driving motor 34 is temporarily stopped. At this time, by the feeding gear 29, the operating unit 29b is engaged from the front side to the operated protrusion 38a of the operation lever 38, and the operated protrusion 38a is pressed rearwards. Therefore, the operation lever 38 is pivoted against the biasing force of the tension coil spring 42, and the roller 41 is spaced rearwards from the outer circumference of the disc-shaped recording medium 100 and moves to a non-contact location, and the regulation to the rotation of the disc-shaped recording medium 100 is released.

As described above, the head feeding unit 43 returns to the initial location, the print head 65 returns to the first location, the moving cam 60 returns to the first engagement location, and the operation lever 38 is pivoted so that the roller 41 is spaced apart from the outer circumference of the disc-shaped recording medium 100 and comes to the non-contact location, thereby restoring the initial state.

In the above printing operations, the head feeding unit 43 performs reciprocation by a distance corresponding to the radius of the disc-shaped recording medium 100, and printing is performed in a region of about one quarter of the printing surface 102 of the disc-shaped recording medium 100.

Therefore, when printing is performed in a region of about one quarter of the printing surface 102 of the disc-shaped recording medium 100, the above operations are conducted.

In the above initial state, the driving motor 34 rotates in one direction again, and the head feeding unit 43 moves to the left from the initial location to the turnaround location.

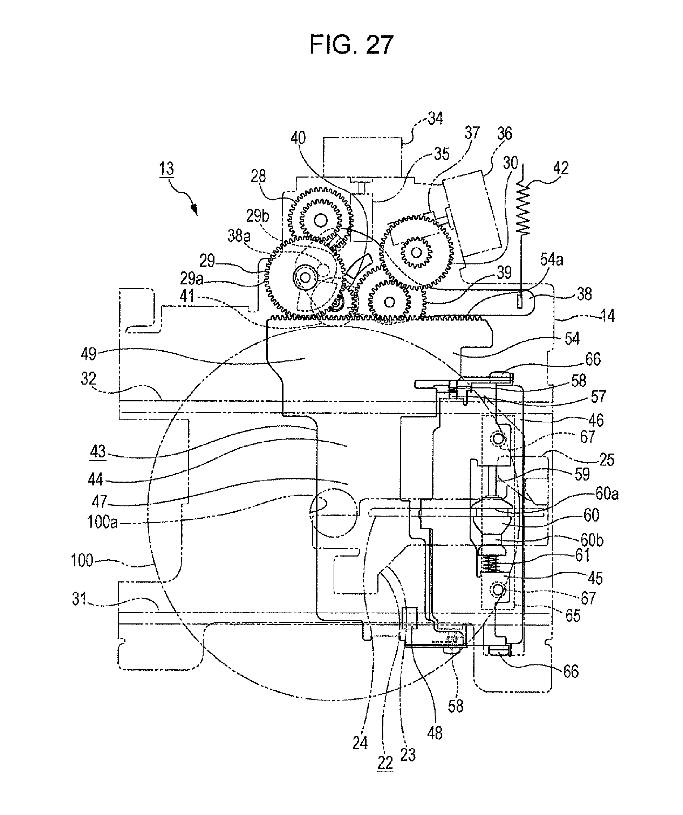

If the driving motor 34 rotates in one direction, the feeding gear 29 rotates so that the operating unit 29b moves substantially forwards. The operated protrusion 38a of operation lever 38 follows the operating unit 29b by the biasing force of the tension coil spring 42, the roller 41 is pivoted to move substantially forwards, and the roller 41 is pressed to the outer circumference of the disc-shaped recording medium 100 (see Fig. 27).

When the roller 41 is pressed to the outer circumference of the disc-shaped recording medium 100, the rotation of the driving motor 34 in one direction is temporarily stopped.

The moving cam 60 moves along with the movement of the head feeding unit 43 to the left, rotates in a state in which the forward path cam engagement portion 60a is pressed to the first operating unit 24a of the cam guide portion 24, and is engaged with the left end portion of the first operating unit 24a.

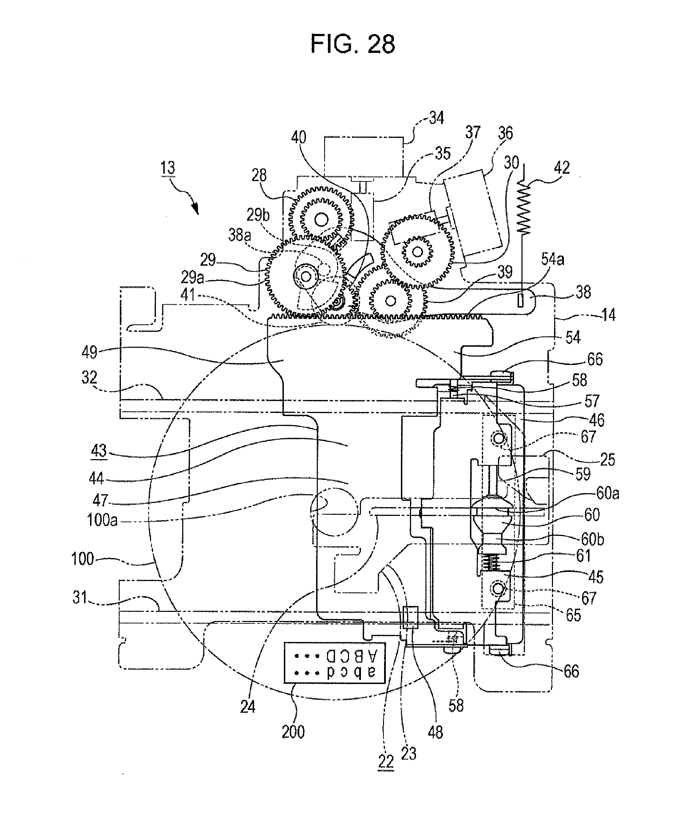

At this time, the rotating motor 36 rotates, and the roller 41 is rotated. Through the rotation of the roller 41, the disc-shaped recording medium 100 supported to the disc table 9 rotates (see Fig. 28). When the disc-shaped recording medium 100 rotates for example 90°, the rotation of the rotating motor 36 is stopped, and the rotation of the disc-shaped recording medium 100 is regulated again by the roller 41.

If the rotation of the rotating motor 36 is stopped, the driving motor 34 initiates rotation in one direction again, and the head feeding unit 43 moves again to the left toward the turnaround location. Therefore, the printing operation is performed before rotating by 90°, and the same printing operation as above is performed by the print head 65 to the printing surface 102 of disc-shaped recording medium 100 in a region different from the region where a print 200 is formed.

As described above, the rotating motor 36, the worm 37, the operation lever 38, the intermediate gear 39, the driven gear 40, the roller 41 and the tension coil spring 42 function as a disc rotating mechanism for rotating the disc-shaped recording medium 100 and changing the printing location by the print unit 13.

Since the disc rotating mechanism for rotating the disc-shaped recording medium 100 in a non-printing state and changing the printing location by the printing surface 102 is installed to the disc driving apparatus 1 as described above, a user may perform printing at a desired location of the printing surface 102 of the disc-shaped recording medium 100 and may improve the convenience in use.

In addition, since the roller 41 rotating in the same direction as the disc-shaped recording medium 100 is used as a member contacting the outer circumference of the disc-shaped recording medium 100, the disc-shaped recording medium 100 may be rotated or regulated by a simple mechanism by means of the rotation and stoppage of the roller 41.

As described above, in the disc driving apparatus 1, the movement of the head feeding unit 43 between the initial location and the turnaround location and the movement of the roller 41 between the contact location and the non-contact location may be performed by one driving motor 34.

Therefore, a dedicated power for moving the head feeding unit 43 and the roller 41 respectively is not necessary, and the effective utilization of the disposing space allows a smaller design and decreases the number of components.

In addition, when the roller 41 is moving from the non-contact location to the contact location according to the rotation of the driving motor 34, the forward path cam engagement portion 60a of the moving cam 60 is engaged with the first operating unit 24a of the cam guide portion 24, and when the roller 41 has moved to the contact location, the forward path cam engagement portion 60a is engaged with the second operating unit 24b of the cam guide portion 24.

Therefore, the regulation to the rotation of the disc-shaped recording medium 100 by the driving motor 34 and the movement of the print head 65 in the vertical direction with respect to the printing surface 102 of the disc-shaped recording medium 100 are performed successively at good timings, and therefore it is possible to ensure rapid operations and good printing state.

### [Conclusion]

As described above, in the disc driving apparatus 1, the print unit 13 for performing printing to the disc-shaped recording medium 100 is installed, the location of the cam support lever 45 with respective to the printing surface 102 according to the engagement location of the moving cam 60 with respect to the cam guide portion 24 of the guide cam 22, and at a non-printing state, the print head 65 is maintained at a location away from the printing surface 102 between the guide shafts 31 and 32 and the printing surface 102.

Therefore, since the print head 65 is located between the guide shafts 31 and 32 and the printing surface 102 in both printing state and non-printing state, the outer housing 2 may occupy a smaller inner space in the vertical direction as much, and the disc driving apparatus 1 may be designed smaller in the thickness direction of the disc-shaped recording medium 100.

In addition, the forward path cam engagement portion 60a of the moving cam 60 and the return path cam engagement portion 60b are formed to have different diameters, and the location of the print head 65 varies in the vertical direction. Therefore, the location of the print head 65 is changed with a simple configuration, and desired operations may be realized without increasing production costs.

Moreover, the moving cam 60 moves in a direction orthogonal to the thickness direction of the disc-shaped recording medium 100, and at the turnaround location, the engagement locations of the forward path cam engagement portion 60a and return path cam engagement portion 60b to the cam guide portion 24 of the guide cam 22 is shifted.

Therefore, since the engagement location of the moving cam 60 to the cam guide portion 24 of the guide cam 22 may be easily shifted with a simple configuration and at the same time the moving cam 60 moves in a direction orthogonal to the thickness direction of the disc-shaped recording medium 100, the engagement location of the moving cam 60 to the cam guide portion 24 may be shifted without increasing the size in the vertical direction.

In addition, since the bias spring 61 for biasing the moving cam 60 in a direction orthogonal to the thickness direction of the disc-shaped recording medium 100 is installed, at the turnaround location, when the engagement of the forward path cam engagement portion 60a of the moving cam 60 to the cam guide portion 24 is released, the engagement location of the moving cam 60 to the cam guide portion 24 may be easily and reliably shifted.

In addition, although it has been described above that the print head 65 performs printing to the printing surface 102 of the disc-shaped recording medium 100 in the forward path, conversely, it is also possible that the print head 65 may perform printing to the printing surface 102 of the disc-shaped recording medium 100 in the return path.

However, it is possible that the print head 65 may perform printing to the printing surface 102 of the disc-shaped recording medium 100 in forward path, and the printed ink may be dried while the head feeding unit 43 is moving in the return path.

It should be understood by those skilled in the art that various modifications, combinations, sub-combinations and alterations may occur depending on design requirements and other factors insofar as they are within the scope of the appended claims or the equivalents thereof.

## Claims

1. A disc driving apparatus comprising:
a recording and reproducing unit for recording or reproducing an information signal for a disc-shaped recording medium having a printing surface; and
a print unit for performing printing to the printing surface of the disc-shaped recording medium,
wherein the print unit includes
a print head contacting the printing surface when performing printing to the printing surface of the disc-shaped recording medium;
a head feeding unit having a head support lever to which the print head is mounted, the head support lever being movable in a direction away from or coming into contact with the printing surface of the disc-shaped recording medium, the head feeding unit moving between an initial location and turnaround location along the printing surface of the disc-shaped recording medium and reciprocating the print head in an forward path from a first location to a second location and in a return path from the second location to the first location;
a guide cam having a cam guide portion extending in a movement direction of the head feeding unit;
a moving cam having an forward path cam engagement portion engaged with the cam guide portion in the forward path and a return path cam engagement portion engaged with the cam guide portion in the return path, supported to the head feeding unit to be movable in a predetermined direction, and integrated with the head feeding unit to reciprocate the head feeding unit; and
a guide member disposed in a state of being fixed along the printing surface of the disc-shaped recording medium and guiding the movement of the head feeding unit between the initial location and the turnaround location,
wherein the print head performs printing to the printing surface in the forward path or the return path,
wherein the location of the head support lever with respect to the printing surface varies when the forward path cam engagement portion is engaged with the cam guide portion and when the return path cam engagement portion is engaged with the cam guide portion, and
wherein, in a non-printing state in which printing is not performed to the printing surface, the print head is located at a position separated from the printing surface between the guide member and the printing surface.

2. The disc driving apparatus according to Claim 1, wherein the forward path cam engagement portion and the return path cam engagement portion of the moving cam have different widths from each other in a thickness direction of the disc-shaped recording medium.

3. The disc driving apparatus according to Claim 1 or 2,
wherein the moving cam is supported to the head feeding unit to be movable in a direction orthogonal to a thickness direction of the disc-shaped recording medium,
wherein the moving cam is movable in the direction orthogonal to the thickness direction of the disc-shaped recording medium between a first engagement location where the forward path cam engagement portion is engaged with the cam guide portion and a second engagement location where the return path cam engagement portion is engaged with the cam guide portion, and
wherein the engagement locations of the forward path cam engagement portion and the return path cam engagement portion to the cam guide portion are shifted at the turnaround location.

4. The disc driving apparatus according to Claim 3, wherein a bias spring for biasing the moving cam in the direction orthogonal to the thickness direction of the disc-shaped recording medium is installed.

5. The disc driving apparatus according to Claim 4,
wherein a cam support shaft extending in a direction orthogonal to a thickness direction of the disc-shaped recording medium and the direction in which the cam guide portion extends is installed to the head feeding unit,
wherein the moving cam is supported to the cam support shaft to be rotatable in an axis rotation direction or to be movable in the axial direction, and
wherein the bias spring is supported to the cam support shaft.

6. The disc driving apparatus according to any of claims 3 to 5, wherein a return cam on which the moving cam slides is installed, the return cam shifting the engagement locations of the forward path cam engagement portion and the return path cam engagement portion to the cam guide portion.

7. The disc driving apparatus according to Claim 1,
wherein a cam support shaft extending in a direction orthogonal to a thickness direction of the disc-shaped recording medium and the direction in which the cam guide portion extends is installed to the head feeding unit, and
wherein the moving cam is supported to the cam support shaft to be rotatable in an axis rotation direction or to be movable in the axial direction.

8. The disc driving apparatus according to any preceding Claim, wherein a spring member for biasing the moving cam in a direction pressing the cam guide portion is installed.

9. The disc driving apparatus according to any preceding Claim, wherein a regulating member pressed to the disc-shaped recording medium to regulate rotation of the disc-shaped recording medium when performing printing to the printing surface is installed.

10. The disc driving apparatus according to any preceding Claim, wherein a driving motor for moving the head feeding unit between the initial location and the turnaround location is installed,
wherein a regulating member for being movable between a contact location contacting the disc-shaped recording medium and a non-contact location away from the disc-shaped recording medium, moving to the contact location when performing printing to the printing surface, and regulating rotation of the disc-shaped recording medium is installed, and
wherein the regulating member moves between the contact location and the non-contact location according to the rotation of the driving motor.

11. The disc driving apparatus according to Claim 10,
wherein a first operating unit and a second operating unit having different widths from each other in a thickness direction of the disc-shaped recording medium are installed to the cam guide portion of the guide cam,
wherein the print head is spaced apart from the printing surface of the disc-shaped recording medium in a state in which the forward path cam engagement portion of the moving cam is engaged with the first operating unit, and the print head contacts the printing surface of the disc-shaped recording medium in a state in which the forward path cam engagement portion is engaged with the second operating unit, and
wherein the forward path cam engagement portion of the moving cam is engaged with the first operating unit when the regulating member is moving from the non-contact location to the contact location according to the rotation of the driving motor, and the forward path cam engagement portion of the moving cam is engaged with the second operating unit when the regulating member has moved to the contact location.

12. The disc driving apparatus according to Claim 11,
wherein a disc rotating mechanism for changing a printing location on the printing surface by rotating the disc-shaped recording medium during the non-printing state is installed,
wherein a rotating motor and a roller rotated by the rotating motor are installed to the disc rotating mechanism, and
wherein a roller rotating in the same direction as the rotation direction of the disc-shaped recording medium and moving away from or coming into contact with the outer circumference of the disc-shaped recording medium is used as the regulating member.

13. The disc driving apparatus according to any preceding Claim, wherein a disc rotating mechanism for changing a printing location on the printing surface by rotating the disc-shaped recording medium during the non-printing state is installed.
